# EUROPEAN PATENT APPLICATION

(11) **EP 4 791 092 A1**
(43) Date of publication of application: **12.08.2026**
(21) Application number: 25156097.5
(22) Date of filing: 05.02.2025
(51) Int. Cl.: H04W 52/02

(54) **COMMUNICATION APPARATUS AND BASE STATION INVOLVED IN A LOW POWER SIGNAL MONITORING PROCEDURE**

(71) Applicant: Panasonic Intellectual Property Corporation of America, Torrance, CA 90504 (US)
(72) Inventor: LI, Hongchao, 63225 Langen (DE); HORIIKE, Naoto, Osaka, 571-8501 (JP); SUZUKI, Hidetoshi, Osaka, 571-8501 (JP)
(74) Representative: Grünecker Patent- und Rechtsanwälte PartG mbB

(57) **Abstract**

The present disclosure relates to a communication apparatus comprising the following. The communication apparatus includes a transceiver, which monitors a signal occasion, SO, of a low power signal. The communication apparatus also comprises a processing circuitry, which identifies a collision between the signal occasion and at least one other radio resource; and performs a UE behavior by adapting at least one segment of the signal occasion in time-domain to resolve the identified collision.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0 or version 18.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved low power signal monitoring procedure.

In an embodiment, the techniques disclosed here feature a communication apparatus comprising the following. The communication apparatus includes a transceiver circuitry, which monitors a signal occasion (SO) of a low power signal and also includes a processing circuitry which identifies a collision between the signal occasion and at least one other radio resource. The processing circuitry also performs a UE behavior by adapting at least one segment of the signal occasion in time-domain to resolve the identified collision.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: illustrates an example of an LO configuration according to one option;
- **Fig. 3**: illustrates another example of an LO configuration according to one option;
- **Fig. 4**: illustrates another example of an LO configuration according to one option;
- **Fig. 5**: illustrates an example of an LO configuration according to another option;
- **Fig. 6**: illustrates an exemplary and simplified structure of a communication apparatus, such as UE, and a base station,
- **Fig. 7**: illustrates a structure of the communication apparatus, such as the UE, according to an exemplary implementation of the improved low power signal monitoring procedure,
- **Fig. 8**: illustrates a structure of the communication apparatus, such as the base station, according to an exemplary implementation of the improved low power signal monitoring procedure,
- **Fig. 9**: illustrates a flow diagram for the behavior of the UE according to an exemplary implementation of the improved low power signal monitoring procedure,
- **Fig. 10**: illustrates a flow diagram for the behavior of the base station, according to an exemplary implementation of the improved low power signal monitoring procedure,
- **Fig. 11**: is a signaling diagram illustrating an exemplary exchange between the UE and the gNB for an exemplary implementation of the improved low power signal monitoring procedure,
- **Fig. 12**: an exemplary implementation of the First Implementation of the improved low power signal monitoring procedure,
- **Fig. 13**: an exemplary implementation of the Second Implementation of the improved low power signal monitoring procedure,
- **Fig. 14**: an exemplary implementation of the Third Implementation of the improved low power signal monitoring procedure,
- **Fig. 15**: an exemplary implementation of the Fourth Implementation of the improved low power signal monitoring procedure,
- **Fig. 16**: an exemplary implementation of the Fifth Implementation of the improved low power signal monitoring procedure,

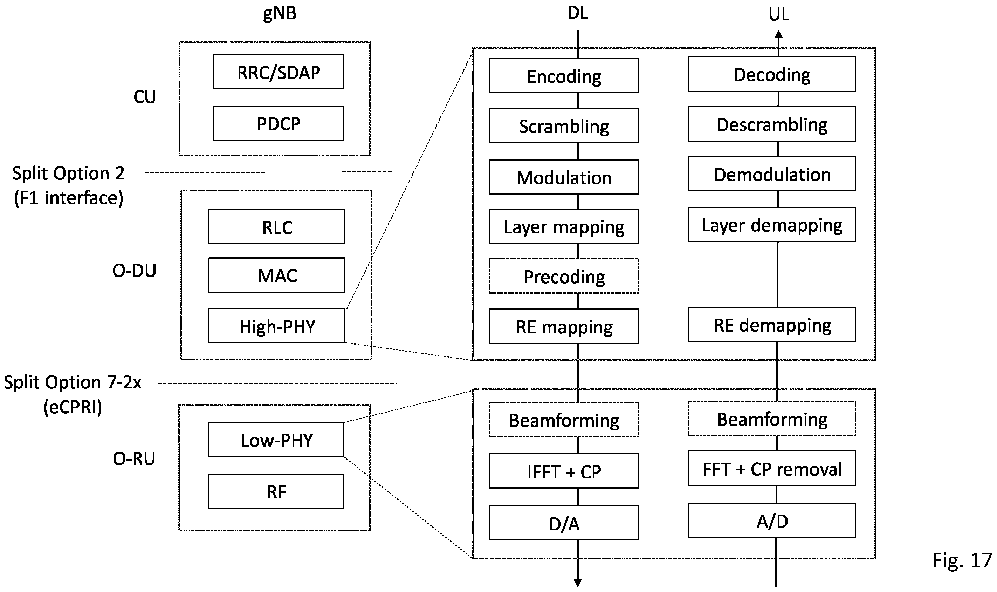

- **Fig. 17**: shows exemplary functional split options in 5G open-radio access network (O-RAN).

### DETAILED DESCRIPTION

### 5G NR system architecture and protocol stacks

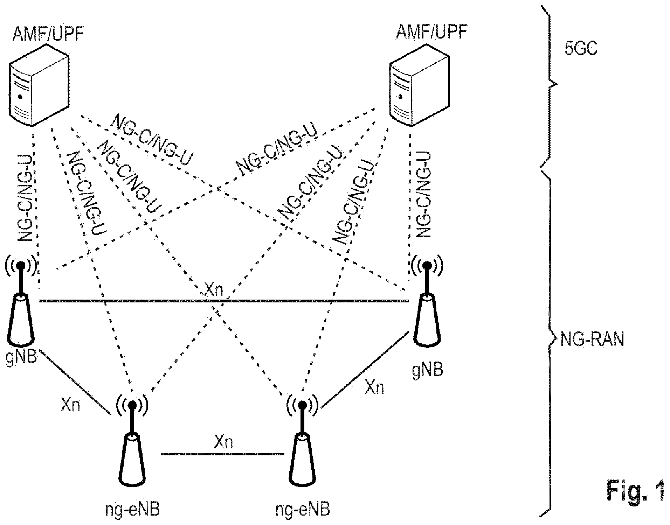

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v18.3.0, section 4).

### Power saving

A new study item has been started within 3GPP, aiming at studying and evaluating low-power wake-up receiver (LP-WUR) architectures and wake-up signal (LP-WUS) designs to support wake-up receivers. One of the targets is to achieve a substantial UE power saving gain. A report capturing this study item is available at http://www.3gpp.org and titled "Low-power Wake-up Signal and Receiver for NR as a Rel.18 SI topic" with contribution number RP-221271 from 3GPP TSG RAN meeting #96 in Hungary, June 6- 9, 2022.

Accordingly, power consumption depends on the configured length of wake-up periods, e.g., paging cycle. To meet the battery life requirements, eDRX (extended Discontinuous Reception) cycle with large value is expected to be used, resulting in high latency, which may not be suitable for such services with requirements of both long battery life and low latency. Especially for latencycritical use cases, eDRX is not suitable.

Currently, UEs need to periodically wake up once per DRX cycle, which dominates the power consumption in periods with no signaling or data traffic. DRX is used in RRC idle mode when monitoring for paging messages. Accordingly, a UE does not have to monitor all PDCCH transmission opportunities, but rather only the paging occasions, and can thus better preserve battery power. In connected mode, DRX allows a UE to enter into a "sleep" state during which it does not need to monitor PDCCH. The UE periodically wakes up to monitor PDCCH or to send a scheduling request for initiating an uplink data transfer. Thus, a base station (gNB) is required to wait until the UE becomes active and only then transmit data to it. Uplink is not delayed, unless the base station configures uplink scheduling request period according to the downlink DRX cycle.

DRX cycle in connected mode is configured by RRC. An inactivity timer is started after each PDCCH reception. After expiry of the inactivity timer, there may be an optional period of short DRX cycles, before the regular (long) DRX cycles. The active period in which the UE reads PDCCH is referred to as "OnDuration" or "DRX active" state. The sleeping period in which the UE does not read PDCCH is referred to as "OffDuration" or "DRX inactive" state. A base station has the possibility to send a UE into the DRX inactive mode anytime by using MAC signaling.

Since Release16, a wake-up signal (WUS) has been provided by a DCI format 2_6. The DCI format 2_6 has been used to wake up a UE or to indicate to a UE to skip PDCCH monitoring before DRX. In particular, this DCI is used for notifying the power saving information outside DRX Active time for one or more UEs. The DCI is scrambled by PS-RNTI and carries:
- Wake-up indication whether the UE is to enter a dormancy state or wake up from the dormancy state; and
- an SCell dormancy indication which is a bitmap where each bit corresponds to one of the SCell group(s) configured by higher layers (RRC), with MSB to LSB of the bitmap corresponding to the first to last configured S
- Cell group. This indicates for which SCells the wake-up indication applies.

In more detail, Section 7.3.1.3.7 of 3GPP TS 38.212 v17.2.0 defines the Format 2_6. Accordingly, DCI format 2_6 is used for notifying the power saving information outside DRX Active Time for one or more UEs. The following information is transmitted by means of the DCI format 2_6 with CRC scrambled by PS-RNTI: *block number 1, block number 2,..., block number N.* The starting position of a block is determined by the parameter PSPositionDCI2-6 provided by higher layers for the UE configured with the block. If the UE is configured with higher layer parameter PS-RNTI and dci-Format2-6, one block is configured for the UE by higher layers, with the following fields defined for the block: Wake-up indication (1 bit), SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group. The size of DCI format 2_6 is indicated by the higher layer parameter SizeDCI_2-6.

UE may save power by skipping unnecessary PDCCH monitoring period using DCI format 2_6. The dormancy can be configured and applied for RRC CONNECTED UEs.

In Release17, a Paging Early Indication (PEI) design has been introduced. It employs DCI format 2_7. DCI format 2_7 is used to indicate UE whether it needs to skip or monitor its paging occasions in each paging cycle. Accordingly, a UE may save power by reducing synchronization signal block (SSB) measurements before detecting PEI, compared with the conventional paging detection, which potentially requires measuring more SSBs. The PEI can be configured in SIB (System Information Block) and applied for paging monitoring of both RRC CONNECTED and IDLE/INACTIVE UEs.

If UEs are able to wake up only when they are triggered, e.g., paging, power consumption could be dramatically reduced. This can be exemplarily achieved by using the above-mentioned wake-up signal to trigger the main radio and using a separate receiver (wake-up receiver, WUR), which has the ability to monitor wake-up signal with a very low power consumption. The main radio may work for data transmission and reception, which can be turned off or set to deep sleep unless it is turned on. The power consumption for monitoring wake-up signal depends on the wake-up signal design and the hardware module of the wake-up receiver used for signal detecting and processing.

In order to target low-power WUS/WUR for power-sensitive, small form-factor devices including loT use cases (such as industrial sensors, controllers) and wearables, signal design and transmitter / receiver operations have to be considered carefully. Other use cases are not precluded, such as XR/smart glasses, smart phones, and the like.

In other words, Release 18 LP-WUS/WUR design aims for a LP-WUS, which is friendly for more efficient receiver structure, e.g. separate module for LP-WUS detection with relaxed requirement on time/frequency synchronization. The legacy design has been basically DCI-based, which requires UE to firstly measure one or more SSBs for AGC training and time/frequency synchronization before detection. Long active time for receiving and processing SSBs is the main source of power consumption.

### Low-Power Wake-Up Signals, LP-WUS

An LP-WUS design is commonly applicable to both IDLE/INACTIVE and CONNECTED modes. For example, an OOK (OOK-1 and/or OOK-4) based LP-WUS can be used, and may use overlaid OFDM sequence(s) over OOK symbol for additional signaling capabilities. The LP-WUS design shall ensure that for IDLE/INACTIVE operation, the same information is delivered irrespective of a LP-WUR type. The OFDM sequence may carry information.

For IDLE/INACTIVE modes, a configuration of LP-WUS may indicate a paging monitoring triggered by the LP-WUS, including at least configuration, sub-grouping and entry/exit condition for LP-WUS monitoring. LP-WUS periodicity and timing may be aligned with the Paging Occasion (PO) defined by the Discontinuous Reception (DRX) cycle. A group of UEs monitoring the same LP-WUS monitoring occasion may be divided into multiple subgroups, where LP-WUS can provide wake-up indication for each subgroup. UEs may activate LP-WUS monitoring based on configuration for LP-WUS occasions. UEs return to the low-power state if no LP-WUS signal is detected during the designated occasion.

LP-SS is used for synchronization and Radio Resource Management (RRM) in the serving cell.

For CONNECTED mode, procedures may allow UE MR PDCCH monitoring triggered by LP-WUS including activation and deactivation procedure of LP-WUS monitoring.

Accordingly, in a possible implementation scenario, a UE performing a low-power operation may be in any of a RRC_CONNECTED mode, a RRC_IDLE mode or a RRC_INACTIVE mode.

### Further Improvements

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a mobile station or mobile node or user terminal or user equipment (UE) or communication apparatus or communication device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

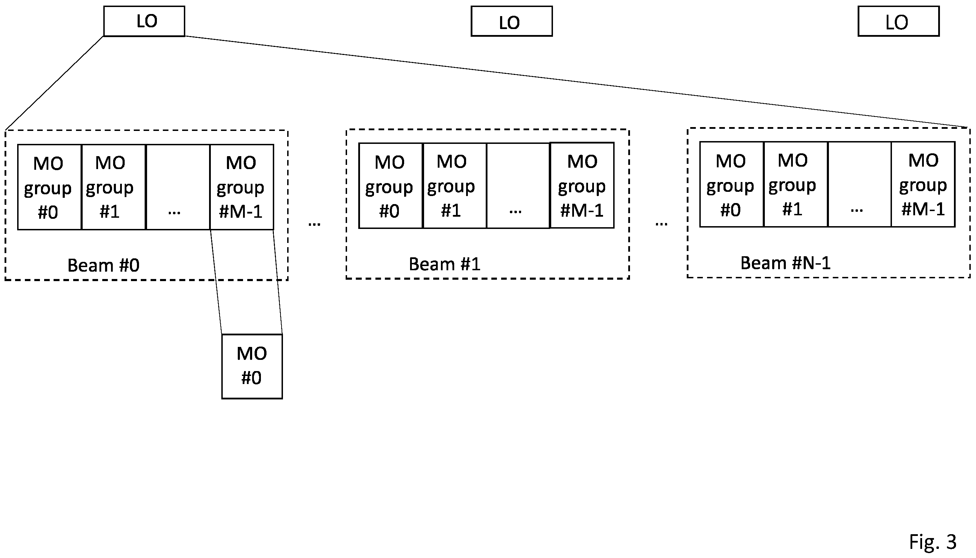

The base station can be implemented exemplarily in a split architecture (see Fig. 3), according to which a gNB can be split into a gNB-CU (Central Unit) providing support for the higher layers (e.g. RRC) and one or more gNB-DUs (Distributed Units) providing support for the lower layers (e.g. MAC, PHY).

Communication between the UE and the base station is typically standardized and may be defined by different layers, such as PHY, MAC, RRC etc. (see above background discussion).

As used herein, the term **"skipping"** can be understood, for example, as the decision to not perform an action. In other words, skipping refers to the temporary interruption of an operation during a defined time frame. While the skipped operation is not performed and is considered as not having occurred, other operations-such as transmitting or receiving information-may still take place during the same time frame.

The skipping of a signal occasion for example is to be understood as skipping the monitoring for a certain time frame. The monitoring is only interrupted for this time frame and may be resumed afterwards. Skipping does not imply rescheduling or shifting the skipped operation to another time instance, but means that the operation is omitted entirely for that duration. E.g. the skipped operation is not performed and considered to have not been occurred. For example, skipping a monitoring occasion entails pausing the monitoring of the occasion for the defined time frame, after which it can be resumed as per the defined schedule. This concept applies broadly to various operations, including transmissions, receptions, monitoring activities, and signal or channel scanning. Other possible terms that could be used are **"omitting", "dropping",** or **"leaving out".**

As used herein, the term **"shifting"** can be understood as performing an action at another, e.g. later, time instance than originally scheduled. The action is shifted and not performed at the scheduled time instance, but is performed at another time. In other words, shifting refers to the temporary interruption of an operation at the scheduled time, with the understanding that the operation will still be carried out at a later time. For instance, shifting a signal occasion means that the complete signal occasion or a part of the signal occasion is shifted to another time unit.

Unlike skipping, shifting ensures that the operation is not completely omitted, and the same information or amount of information intended for transmission, reception, monitoring or similar is preserved. Thereby, the operation that is shifted can e.g. be a transmission, a reception, a monitoring, a scanning for signals or channels. Other possible terms that could be used are **"deferring", "delaying",** or **"postponing".**

The term **"collision"** as used here can be understood as a partial or full collision. The collision can be a collision in time or a collision in time and frequency. E.g. the collision can be a partial overlap in time or a partial overlap in both time and frequency. The collision might also be a full overlap in time or a full overlap in both time and frequency. Features as described with respect to a collision are to be understood as both relating to a partial overlap as well as to a full overlap.

An overlap in time can be understood as an overlap in time of two resources. This means that two or more activities take place simultaneously or in partially overlapping time periods. Especially, two scheduled events overlap in time if two or more activities take place in a same time resource unit or in partially overlapping resource units. An overlap in time and frequency can be understood as an overlap in time and frequency of two scheduled events. Two or more activities are scheduled to take place simultaneously or in partially overlapping time periods and are scheduled to take place in the same frequency range or in partially overlapping frequency ranges. A collision of two resources might affect the processing of one or of both resources. A timely overlap of segments of two events or resources might already affect the processing of these two resources and is therefore also considered as a collision. Other possible terms could be used for the term "collide", such as **"overlap", "coincide",** or **"intersect".** The two terms overlap and collision are interchangeably used throughout the description.

The term **"low power signal"** as used herein can be a low-power wake up signal (LP-WUS) or a low-power synchronization signal (LP-SS). An LP-WUS is a signal transmitted by a scheduling device to notify a communication device, such as e.g. a user equipment, UE, in a low-power state, such as RRC IDLE or RRC INACTIVE mode, of the need to monitor for subsequent messages. In particular, LP-WUS may indicate a UE in a RRD IDLE or RRC INACTIVE mode to monitor a paging occasion. It is specifically designed to minimize energy consumption by allowing UEs to avoid unnecessary wake-ups unless the signal is detected. If the UE is in RRC CONNECTED mode, the LP-WUS may indicate the UE to monitor a downlink control channel, e.g. a PDCCH. The LP-WUS can be transmitted periodically within designated signal occasions and can be based on simple modulation schemes like On-Off Keying (OOK) to maintain low complexity.

An LP-WUS may include different parts intended for respective UEs. An LP-WUS may be intended for a single UE, or an LP-WUS may be intended for a group or multiple group of UEs, wherein the single group may include one or more UEs. When an LP-WUS is successfully received, it may indicate whether or not to monitor a paging occasion or to monitor a downlink control channel, exemplarily a PDCCH.

An LP-SS is a signal transmitted by the scheduling device to facilitate synchronization for the communication device such as a UE in a low-power state. In particular, it may be used by the UE for synchronizing to the LP-WUS. It helps UEs align their timing with the network, ensuring reliable communication and efficient resource utilization. The LP-SS may carry additional information for Radio Resource Management (RRM) and can be transmitted periodically within designated signal occasions to support UE synchronization with the serving cell.

A **"monitoring occasion" (MO)** is a time-frequency radio resource, which defines an occasion during which a communication device such as an UE monitors for the transmission of an LP-WUS or an LP-SS from the scheduling device such as the base station. MOs are configured by the scheduling device and are designed to enable efficient energy consumption by allowing UEs to listen for wake-up signals only during these defined monitoring occasions.

An MO may be configured specifically for one UE or for a group of UEs that includes more than one UE. In the latter, multiple UEs share the same MO. Further, an MO may be configured as one repetition (among a plurality of repetitions) that is specific for one UE or for a group of UEs. An MO may comprise L number of symbols, e.g. OOK symbols.

A **"low power WUS occasion"** (LO) is a configuration defined by the scheduling device that comprises and aligns multiple MOs, which may be configured for multiple UEs. An LO is structured to organize and to synchronize the timing of MOs for efficient resource management and to ensure that UEs can reliably detect LP-WUS within the occasion.

In a current **RAN1 agreement,** it was agreed on the following implementation of LP-WUS and LP-SS.

It was agreed in a RAN1 agreement that to determine the binary sequences for LP-SS, for each value, a sequence length L is down-selected from the corresponding candidate values:
- M = 1, L = {4, 6, 8},
- M = 2, L = {8, 12, 16, 24},
- M = 4, L = {16, 24, 32, 56}.

Additionally, also one or more than one L value may be applied to each of the M values M = {1, 2, 4}, where M is the number of OOK symbols/chips within an OFDM symbol The L values may also be applied to other applicable subcarrier spacings (SCS(s)). Also other M values in addition to M = {1, 2, 4} may be supported. Also, the time estimation averaged across multiple LP-SS occasions may be applied. Further, with sequence length L, Manchester coding may be used, which will further extend the length L, e.g., to 2*L. However, also any other agreed sequence type might be used. The above applies at least for both 15 kHz and 30 kHz.

For the configuration on LP-WUS transmission, the following was also agreed in the RAN1 agreement:
N beams with N>1 may be part of an LO configuration. When K (K>1) LP-WUS MOs may be configured for each of the N beams in an LO, it can be selected between the following Option A and Option B.

### Option A:

K LP-WUS MOs for a beam are divided into M (M >=1) groups of R LP-WUS MOs. A UE monitors all or some of the MO(s) within the K LP-WUS MOs. For each group of R LP-WUS MOs, the same LP-WUS information is transmitted. M = 1 and M > 1 is supported and R may be R=1 or R>= 1.

Different LP-WUS information can be transmitted in different groups of R LP-WUS MOs.

### Option B:

K LP-WUS MOs for a beam are divided into G (G >= 1) groups of R*M (M >= 1) LP-WUS MOs. A UE monitors all or some of the MO(s) within one group of R*M LP-WUS MOs based on its subgroup ID. M = 1 and M > 1 is supported and R may be R=1 or R>= 1.

Each group of R*M LP-WUS MOs is further divided into M groups of R LP-WUS MOs. For each group of R LP-WUS MOs, the same LP-WUS information is transmitted.

Different LP-WUS information can be transmitted in different groups of R LP-WUS MOs.

Further, it has been agreed that at least for a 1:1 LO to paging occasion (PO) mapping, the maximum value of M for Option A or Option B with G=1 (if either of them is supported) is 4.

Further, at least the following codepoints are supported for the LP-WUS:
- One codepoint corresponding to each of the subgroups that can be indicated by LP-WUS,
- One codepoint corresponding to all the subgroups that can be indicated by LP-WUS,
- Additional codepoints

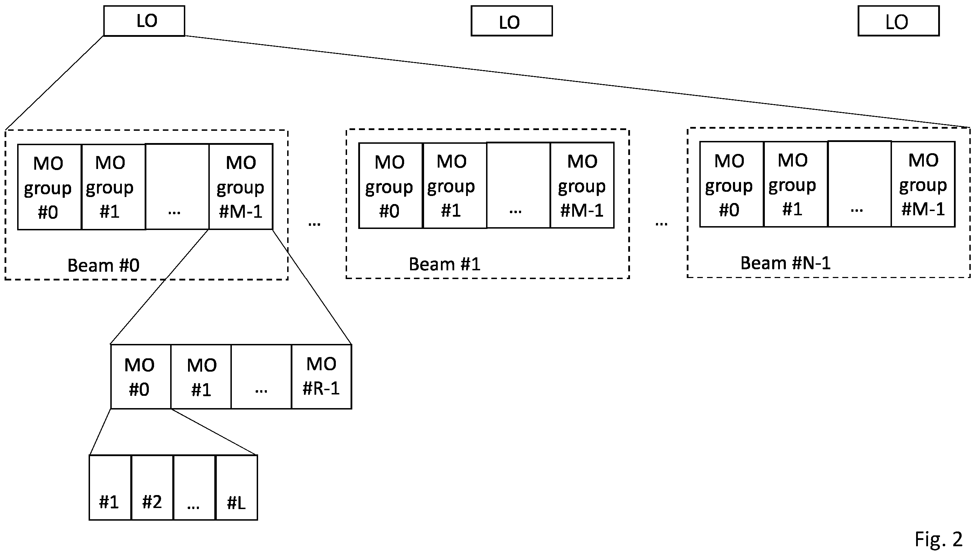

An exemplary illustration of an LO configuration according to Option A is shown in Fig. 2. The illustration only shows one of multiple implementations according to the mentioned RAN1 agreement.

Figure 2 shows multiple LOs, with one LO configuration shown detailed. Each LO may include N beams (N ≥ 1), and for each beam, K LP-WUS MOs are configured. These K MOs can be divided into M groups and R repetitions, where K=M x R. Each beam has the same number of K MOs in this example.

One configuration may include one MO group (M=1) and no repetitions (R=1) such that each MO is specific to one UE. When M>1 is assumed, each beam has M MO groups, and each group may include multiple UEs. A UE can monitor some or all MOs within the K LP-WUS MOs, based on its configuration. In such a setup, an MO is specific for a group of UEs (MO group).

If repetitions are used, each MO group (M) is divided into R repetitions, and each repetition transmits the same LP-WUS information. In one example, in two different MO groups, for example in MO group M#0 and MO group M#1 different LP-WUS information may be transmitted.

In this example, it is assumed that each beam has the same number of R repetitions for each MO group, though this number may vary between beams. When each MO group is divided into repetitions, an MO is specific for one repetition for one group in one beam. Such a configuration is exemplarily shown in Fig. 2, e.g., MO#1 is a repetition in group M-1 for beam #0.

A UE associated with an MO group monitors all MOs in that group, including all repetitions if configured. For instance, a UE in MO group #0 monitors all MOs of the group, including repetitions if used.

A UE may also monitor all MOs within an LO. For example, in IDLE or INACTIVE mode, the UE scans all MOs in its configured LO until it detects the information for its associated MO group.

Exemplarily, the MO may comprise L number of symbols, with L>1. The symbols may be OFDM symbols.

Another example of an LO configuration is shown in **Fig. 3****.** Here each LO exemplarily includes multiple beams (N>1) with each beam being divided into M MO groups (M>1). In this example, no repetitions of MOs are transmitted (R=1). Thus, one MO is specific for one MO group of one beam, here MO #0 for MO group #M-1 of beam #0. Exemplarily, the MO of MO group #0 for beam #0 may transmit the same or different information than the MO of MO group #0 in beam #1.

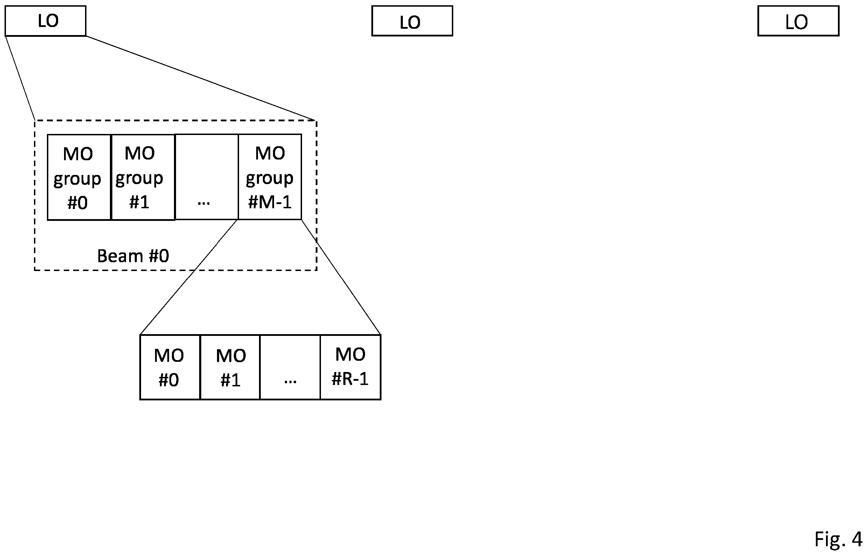

Another example of an LO configuration is shown in **Fig. 4****.** Here each LO exemplarily includes only one beam (N=1). The LO is configured with K MOs that can be divided into M groups and R repetitions, where K=M x R and M>1 and R>1. In this example, one MO is specific for one repetition of one MO group, e.g. MO #0 for MO group #M-1.

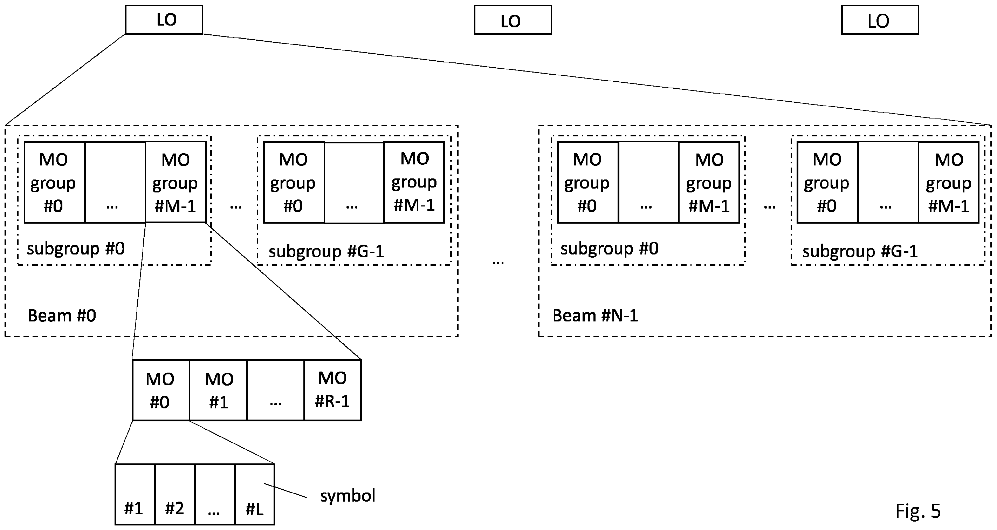

An exemplary illustration of an LO configuration according to above-mentioned Option B is shown in **Fig. 5****.** As before, this illustration is merely an exemplarily configuration with multiple assumptions made.

In this example, the LO contains multiple MOs grouped within one or more beams. It is assumed that one LO comprises N beams (N > 1). For each beam, K LP-WUS MOs are divided into G subgroups (G >1), where each subgroup consists of R × M MOs with R ≥ 1 and M ≥ 1. Each subgroup is divided into M MO groups, and each MO group is further divided into R MOs, which represent repetitions transmitting the same LP-WUS information.

A UE monitors all or some MOs within a subgroup based on its configuration. For example, a UE associated with subgroup G#0 monitors all MOs in G#0. A UE associated with subgroup G#0 and MO group #0 may only monitor the MOs in MO group #0 of G#0. In different MO groups (e.g., M#0 and M#1), different LP-WUS information can be transmitted.

The configuration of an MO depends on network complexity. An MO may be specific to a single UE or a group of UEs (MO group). For repeated MO transmissions, an MO may correspond to a single repetition for one UE or one UE group. In some cases, an MO may be specific to a subgroup G, meaning all UEs in the subgroup are configured with the same MO.

Under the assumption that the LO comprises multiple MOs and includes multiple beams, one MO may also be specific for one beam or for one MO group of one beam. With the configuration as shown in Fig. 5, one MO is specific for one repetition of one MO group of one subgroup of one beam, e.g. MO #0 of MO group #M-1 of subgroup #0 of beam #0. Fig. 5 also shows one example of an MO that comprises L number of symbols, with L>1. The symbols may be OFDM symbols.

As mentioned above, an MO is a time-frequency radio resource, which defines an occasion during which the UE monitors for the transmission of an LP-WUS or a LP-SS from the scheduling device such as the base station.

The configuration of an MO, including its duration, is influenced by factors such as the number of bits required for the low power signal, the modulation scheme (e.g., OOK with M values of 1, 2, or 4), and additional coding mechanisms such as Manchester coding, repetition for reliability, and Cyclic Redundancy Check (CRC) for error detection. Depending on these parameters, the bit length of an MO may increase significantly and, consequently, the time duration of each MO can span over one or more time slots (of e.g. 14 OFDM symbols). Accordingly, also an LO, which comprises multiple MOs may cross multiple time slots or even subframes (of two slots).

As indicated, MOs may become longer such that the total duration of an LO, which aggregates multiple MOs, can span across multiple time slots. This extended duration may affect the network scheduling and resource management.

The inventors realized that in the above configuration, examples thereof being illustrated in Fig. 2 - Fig. 5, resources may collide or overlap with an MO or LO (in the following called signal occasion, SO, covering both MO and LO). This may result in an unsuccessful reception of the colliding resources e.g. in form of not receiving the low power signal or receiving a signal not being identifiable as low power signal. Further, even multiple MOs configured for various UEs might be affected by a collision. Additionally, also the processing, e.g. the transmission or reception, of the other resource colliding with the MO might be affected. This, for example, results in an unsuccessful reception or an unsuccessful transmittal of a signal on the resource.

Thereby, as indicated above, such a collision might be in the form of a partial overlap between two resources. Meaning that e.g. one or more segments of a signal occasion might overlap in time-domain or time-frequency-domain with at least a part of another resource. Thus, in one example, a time overlap of segments of two events or resources - without requiring a frequency overlap - might already affect the processing of these two resources and is therefore further considered as collision.

Moreover, interruptions during MOs configured within an LO may affect the transmission performance, particularly when competing network signals take precedence. Such interruptions could hinder the UE's ability to reliably detect and process the LP-WUS or related signals as the LP-SS. A collision may occur in any of the previously described MO configurations, being it that one MO is specific for one UE or for multiple UEs or for a specific subgroup. Such a collision may also occur on an LO level meaning that the collision also affects another UE configured with another MO. Since collision may influence the transmission or reception of the LP-WUS or LP-SS, it may be desirable to handle the collision and overlapping efficiently.

The present disclosure relates to different solutions (and respective variants) of an improved low power signal monitoring procedure. Improved communication devices (such as UEs), improved base stations and improved integrated circuits are presented in connection therewith, which participate separately or together in the improved low power signal monitoring procedures. In the following, although a UE is used for the description as an example for the communication device, the description is equally applicable to a communication device. Corresponding methods for the communication device behavior and the base station behavior are provided as well. The integrated circuits may correspond to the UE and base station, and respectively their behavior.

### Solutions

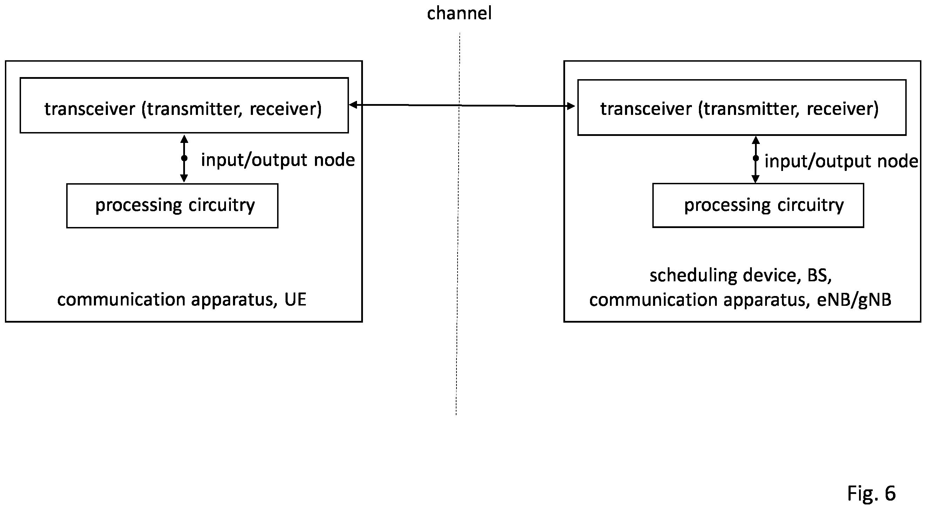

Fig. 6 illustrates a general, simplified and exemplary block diagram of a user equipment (also termed communication apparatus) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication apparatus may comprise a transceiver and processing circuitry. The transceiver in turn may comprise and/or function as a receiver and a transmitter. The processing circuitry (can also be termed circuitry) may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. In one example, the receiver may be responsible for performing the process of receiving and other processes related thereto, such as monitoring a channel.

Accordingly, also the scheduling device may comprise a transceiver and processing circuitry. The transceiver in turn may comprise and/or function as a receiver and a transmitter. The above described functionalities of the transceiver and the processing circuitry apply mutatis mutandis to the functionalities of the transceiver and the processing circuitry of the scheduling device.

As indicated above, a collision between two scheduled resources may occur in a network affecting one or multiple communication apparatus. In the following, several implementations to resolve the collision are presented. The different implementations are applicable to resolve a collision independently of the type of the two colliding resources or the number of UEs affected by such a collision.

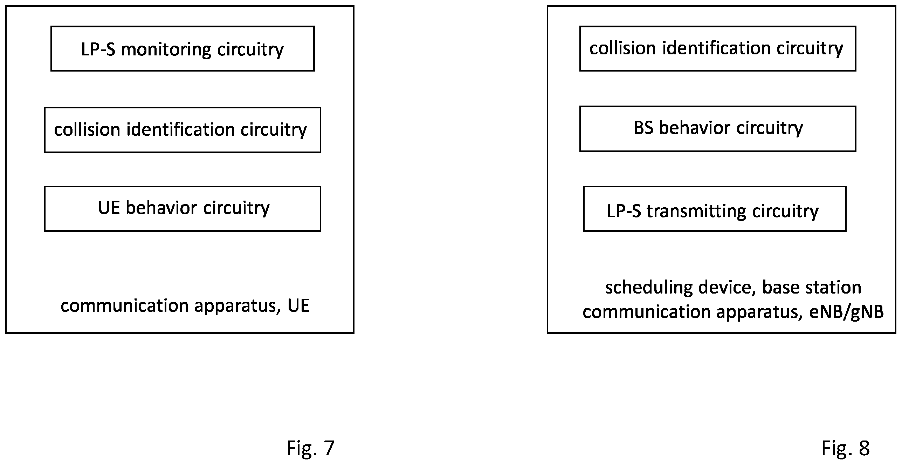

**Fig. 7** shows an exemplarily functional structure of a communication apparatus, a UE, according to a basic implementation. In one example, the apparatus structure can be implemented based on the general apparatus structure explained in connection with Fig. 6. The various structural elements of the communication apparatus illustrated in said Fig. 7 can be interconnected between one another e.g., with corresponding input/output nodes (not shown) e.g., in order to exchange control and user data and other signals. Although not shown for illustration purposes, the communication apparatus may include further structural elements.

As shown in Fig. 7, the UE comprises an LP-S monitoring circuitry, which monitors a signal occasion of a low power signal. In one following example, the signal occasion (SO) can be in the form of an MO or an LO. Both, the MO as well as the LO are configured by the base station. The SO may be an occasion for the transmission of a LP-WUS or a LP-SS. A LP-WUS received by the UE indicates the UE to perform monitoring on a monitoring occasion. When the UE is in RRC connected mode, the LP-WUS may indicate to monitor a downlink control channel. When the UE is in RRC IDLE or RRC INACTIVE mode, the LP-WUS may indicate to monitor for paging. A LP-SS aims to synchronize the UE to the LP-WUS. The LP-SS provides timing and frequency synchronization information to the UE, to allow the UE itself with the network's timing so that it can accurately detect and decode the LP-WUS.

The UE also comprises a collision identification circuitry used to identify whether a collision between an SO and at least on other radio resource occurs. If a collision is detected, a UE behavior circuitry of the UE performs a UE behavior by adapting at least one segment of the SO in time-domain to resolve the identified collision. The processing circuitry of the general UE structure of Fig. 6 can be implemented as the collision identification circuitry and UE behavior circuitry of Fig. 7, and can also perform further functions as will be become apparent from below. The transceiver of Fig. 6 can be implemented as the LP-S monitoring circuitry and assist the above circuitry, and can also perform further functions as will become apparent from below.

One exemplary procedure is implemented by a communication apparatus that includes the following. The communication apparatus includes a transceiver, which monitors a signal occasion, SO, of a low power signal, and also includes a processing circuitry, which identifies a collision between the signal occasion and at least one other radio resource. The processing circuitry also performs a UE behavior by adapting at least one segment of the signal occasion in time-domain to resolve the identified collision.

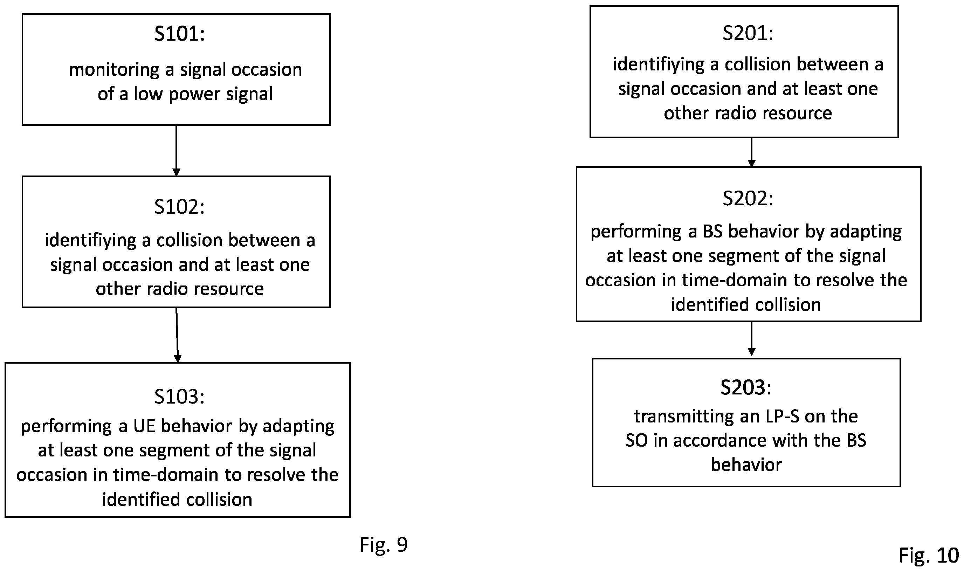

In correspondence with the above-described UE, an exemplarily method for resolving a collision by a UE is provided and shown in **Fig. 9****.** The method describes the steps of:
- S101: monitoring a signal occasion of a low power signal;
- S102: identifying a collision between a signal occasion and at least one other radio resource;
- S103: performing a UE behavior by adapting at least one segment of the signal occasion in time-domain to resolve the identified collision.

The above-described improved low power signal monitoring procedure at the UE facilitates achieving the objective and overcoming at least some of the drawbacks explained above. According to the above implementation, the adaption of at least one segment facilitates providing a flexible yet reliable method to resolve an identified collision. The UE behavior can be varied depending on the type of colliding resources. The presented UE behavior facilitates effectively resolving a collision without or only slightly affecting performance and complexity.

Accordingly, **Fig. 8** shows an exemplarily functional structure of a scheduling device, a base station according to an exemplary implementation of the improved low power signal monitoring procedure, which can be implemented based on the general base station structure explained in connection with Fig. 6. The base station (BS) comprises a collision identification circuitry used to identify whether a collision between an SO and at least on other radio resource occurs. The base station further includes a BS behavior circuitry, which performs a BS behavior by adapting at least one segment of the SO in time-domain to resolve the identified collision. The base station also includes a low power signal transmitting circuitry that transmits a low power signal during the signal occasion. The various structural elements of the base station illustrated in said Fig. 8 can be interconnected between one another e.g., with corresponding input/output nodes (not shown) e.g., in order to exchange control and user data and other signals. Although not shown for illustration purposes, the base station may include further structural elements.

The processing circuitry of the general base station structure of Fig. 6 can be implemented as the above collision identification circuitry and BS behavior circuitry of Fig. 8 and can also perform further functions as will be become apparent from below. The transceiver of Fig. 6 can function as the above low power signal transmitting circuitry of Fig. 8, and can also perform further functions as will become apparent from below.

One exemplary procedure is implemented by a base station that includes the following. The base station includes a processing circuitry, which identifies a collision between the signal occasion and at least one other radio resource and performs a BS behavior by adapting at least one segment of the signal occasion in time-domain to resolve the identified collision. The base station also includes a transceiver, which transmits a low power signal on the SO in accordance with the BS behavior.

A corresponding exemplary method for resolving a collision performed by a base station is provided and shown in **Fig. 10****.** The method comprises the following steps:
- S201: identifying a collision between a signal occasion and at least one other radio resource;
- S202: performing a BS behavior by adapting at least one segment of the signal occasion in time-domain to resolve the identified collision;
- S203: transmitting a low power signal on the signal occasion in accordance with the BS behavior.

The above-described improved low power signal monitoring procedure at the base station facilitates achieving the objective and overcoming at least some of the drawbacks explained above. As already explained in connection with the improved UE/communication apparatus, the adaption of at least one segment facilitates providing a flexible yet reliable method to resolve an identified collision. The base station (as the network entity which configures the behavior information and which transmits the low power signal) has more flexibility on instructing the UE to perform the UE behavior and make us of this information when transmitting the low power signal.

The implementation facilitates to flexibly and adaptively resolve collisions, improving network performance without increasing complexity.

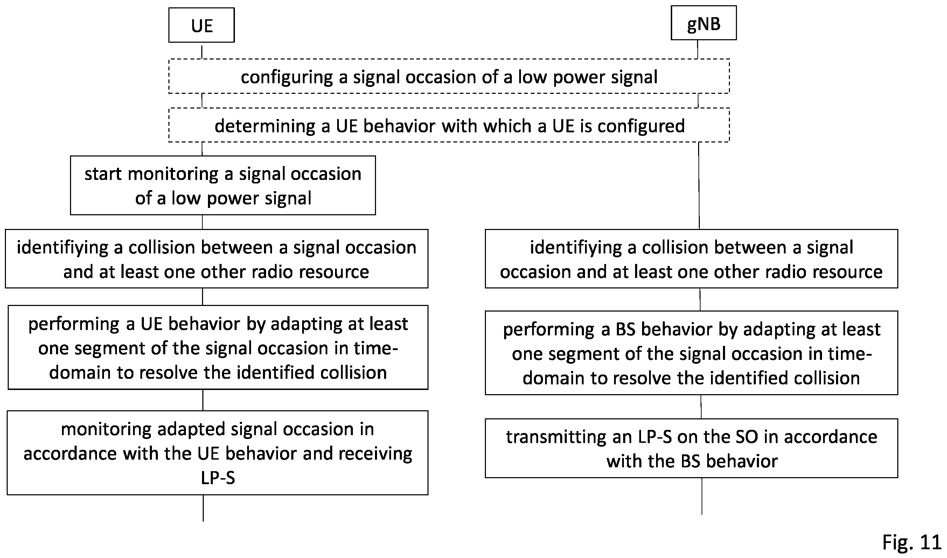

**Fig. 11** is a signaling diagram of an exemplary and simplified implementation of the improved low power signal monitoring procedure illustrating the exchange of messages between the different participating entities (here the UE and the gNBs) and the steps performed at these entities. The UE behavior and gNB behavior follow the above-described UE and base station and the respective methods.

As apparent from Fig. 11, it is exemplarily assumed herein that the gNB configures the SO and thus the MOs that might be part of an LO and therefore the occasions during which the UEs monitor for low power signals. The gNB further is responsible for configuring also many of the other resources that are being transmitted and received throughout a network.

In one exemplary implementation assumed for explaining Fig. 11, the gNB is also responsible for determining a UE behavior that one or multiple UEs perform when detecting a collision. The gNB provides the UE behavior to the UE. The UE behavior configuration might be determined and configured once or might be dynamically changed between different behaviors.

Alternatively, one or more of these configurations might be fixed, in which case there might not be a need for corresponding exchange of configuration between the UE and the gNB. In Fig. 11, the two configuration boxes are thus illustrated with dashed lines to indicate that they are entirely optional and not essential to the improved lower-power signal monitoring procedure.

After being suitably configured, the UE may eventually start monitoring the SO of low power signals in accordance with the received configuration. When the UE identifies a collision between an SO and at least one other resource, the UE performs the UE behavior in accordance with the received UE behavior configuration. Accordingly, also the BS identifies a collision between the SO and the at least one other resource. The BS performs a BS behavior, corresponding to the UE behavior, to resolve the identified collision. The BS may transmit an LP-S on the SO in accordance with the BS behavior, and the UE may monitor the SO in accordance with the UE behavior and the received LP-S.

In a network with multiple UEs, which might monitor the same MO, for example as part of one UE group, or which might monitor different MOs, the gNB might configure a different UE behavior for different UEs. The choice of the UE behavior might be made dependent on the colliding other resource.

In a network with multiple UEs, a UE may detect collisions at the LO level, meaning the collision could impact also other UEs, including those outside its MO group or could impact only other UEs.

The colliding other radio resource can be for example an uplink (UL) resource. Exemplarily, the colliding uplink resource is a scheduled UL resource or a configured UL resource. Further examples on colliding other resource are given below with respect to the first implementation, but are of course applicable for every solution. Examples for scheduled UL resources are dynamic grant (DG) physical uplink shared channel (PUSCH) or configured grant (CG) PUSCH. Examples for a configured UL resource are a physical random access channel (PRACH), a physical uplink control channel (PUCCH) or time-division duplexing (TDD) UL subframes or symbols.

In another example, the colliding radio resource can also be a downlink (DL) resource. The colliding downlink resource can be, for example, a scheduled or a configured DL resource. The colliding downlink resource may also be a reference signal or a synchronization signal. Examples for a colliding scheduled resource are DG physical downlink shared channel (PDSCH) and semipersistent scheduling (SPS) PDSCH. Further, examples for a colliding DL resource are a synchronization signal block (SSB), a physical downlink control channel (PDCCH), a channel state information reference signal (CSI-RS), a positioning reference signal (PRS), or TDD DL subframes or TDD DL symbols.

The collision between the SO and the radio resource occurs at least in time-domain, due to having an overlapping time-domain resource. The SO and the radio resource may also collide in both time and frequency domain, due to having an overlapping resource in the time and frequency domain.

When a collision is identified, the UE may perform the UE behavior on the SO and may use the at least one other radio resource. Exemplarily, the using of the colliding radio resource includes that a signal is received. The signal can be a signal transmitted on a PDCCH or PDSCH, in the form of a SSB, CSI-RS, PRS, etc. In another example, the using of the colliding radio resource includes transmitting a signal, which may be transmitted for example on a PRACH, PUCCH or PUSCH.

In another example, the UE performs measuring on the at least one other radio resource. The measuring is exemplarily performed on DL resources such as the SSB, CSI-RS, or PRS.

As described, if a collision occurs, the colliding resource may be prioritized over the SO and used, while the UE behavior is performed on the colliding segment of the SO to resolve the collision. Alternatively, the colliding radio resource itself may be adjusted, following priority rules between the two colliding resources.

In one exemplary implementation, the colliding segment of the SO is adapted by shifting or skipping the full SO colliding with the at least one other radio resource. For example, the complete MO configured for the UE or additionally also for other UEs is shifted in time-domain. In another example, the complete MO configured for the UE or additionally for other UEs is skipped.

The same applies for a UE behavior that is performed for an LO. When a collision occurs in the LO that either directly affects the UE or only affects other UEs, the UE also performs the described UE behavior. It is possible that in such a scenario, the complete LO is shifted in time-domain to resolve the identified collision. Further, it may also be possible to skip the complete LO colliding in time-domain.

In another exemplary implementation, the UE behavior includes shifting or skipping parts of the SO colliding with the at least one other radio resource. Here, not the full SO is adapted, but only the colliding parts of the SO. Again, exemplarily either a skipping or shifting is performed. Thereby, the shifting and skipping of the colliding part may be performed on an MO level, meaning that only the MO(s) colliding with the radio resource is skipped or shifted in part. It may also be performed on an LO level, meaning that the complete LO is skipped or shifted in part. Such a UE behavior may be configured if the collision affects a plurality of MOs such that a plurality of UEs or MO groups or even a plurality of radio beams are affected.

As already indicated above, when the full or a part of the SO is skipped, this is to be understood as interrupting the monitoring of low power signals during the skipped resource. The monitoring is only interrupted for the skipped resource, but is performed for all non-skipped parts of the SO.

When the full SO or part of the SO is shifted in time-domain, the monitoring is only deferred and performed for all segments of the SO, shifted and not shifted.

These presented implementations effectively resolve the identified collision.

The UE performs the UE behavior, e.g. based on a configuration that is received from the base station. The base station also identifies the collision between the SO and at least one other radio resource and accordingly performs the BS behavior. The BS behavior may also include shifting or skipping the full SO that collides with the at least one other radio resource. Alternatively, the BS behavior may include shifting or skipping parts of the SO colliding with the at least one other radio resource. The BS and the UE apply the same corresponding behavior to resolve the identified collision such that the UE monitors an SO in accordance with the UE behavior and the BS transmits a low power signal on the SO in accordance with the BS behavior.

In the following, additional implementations according to the improved low power signal monitoring procedure will be presented. In brief, according to the First Implementation, the UE behavior includes shifting the full SO in time domain to a subsequent resource. According to the Second Implementation, the UE behavior includes shifting only a part of the SO in time domain to a subsequent resource. According to the Third Implementation, the UE behavior includes skipping only a colliding part of the SO. According to a Fourth Implementation, the UE behavior includes skipping not only the colliding part of the SO, but all parts following subsequently. According to a Fifth Implementation, the UE behavior includes skipping the complete colliding SO.

Details on the improved monitoring procedure for example regarding the occurring collision on the MO and LO level and the colliding other resource are given with respect to the first implementation. The mentioned aspects also apply for the second - fifth implementation.

### First Implementation

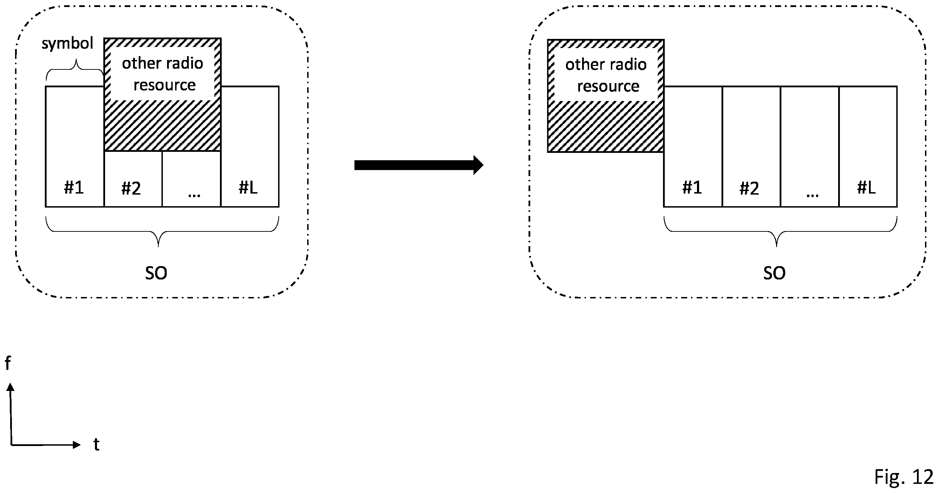

According to the First Implementation, the UE behavior includes shifting the full SO in time domain to a subsequent resource. An exemplarily illustration of the UE behavior according to the first implementation is depicted in **Fig. 12****.**

Fig. 12 shows on the left half an exemplarily collision scenario between an SO and another radio resource. The SO can be an MO or an LO and is exemplarily shown with L symbols denoted as #1 - #L. Each symbol may be in the form of one OOK symbol. Such that L denotes the total number of OOK symbols for the SO.

For illustration purposes, the colliding other resource is depicted as being in the size of two symbols in the time-domain. However, it is clear that this figure is an example and only serves to visualize the present implementation and is not limited to any size of the colliding resource. Further, for simplicity the collision is depicted as a partial overlap in frequency domain and a partial overlap in the size of two symbols in the time-domain. In other examples, the collision might also occur only in the time-domain.

When the UE identifies such a collision, the UE shifts the full SO, here exemplarily symbols #0 - #L, in time domain to a subsequent resource (right half of Fig. 12). Thus, not only the colliding symbols of the SO are shifted, but the complete SO. The UE monitors the shifted SO for low-power signals at the subsequent resource. While the full SO is shifted, the colliding other resource is used as originally intended. Thus, the UE still may use the SO to monitor for low power signals and may use the shifted SO to decode the low power signal.

In the figure, exemplarily only the collision with one other radio resource is shown. However, it is clear that the same principle as explained is applicable in case the SO collides with more than one other radio resource.

In the above, the improved procedure of the first implementation was described in general based on a signal occasion, which can be either a single MO or an LO comprising multiple MOs.

When the improved procedure is performed based on an MO as the SO, the UE identifies whether or not a collision occurs with one or more MOs monitored by the UE. According to the present First Implementation, when identifying a collision with one or more MOs, the UE shifts the full colliding MOs to a subsequent resource. The same UE behavior could be performed in turn also by other UEs affected by an MO collision.

When the improved procedure is performed based on an LO as the SO (the LO comprising a plurality of MOs), the UE identifies whether or not a collision occurs with an LO. It is worth noting that the colliding radio resource can be in any one or more MOs of the LO and need not be in the MOs actually monitored by the UE. Put differently, the UE may identify an LO collision, even if the MOs it is actually monitoring are not affected by the colliding resource.

According to the present First Implementation, when identifying an LO collision, the UE shifts the full LO to a subsequent resource. The same UE behavior could be performed in turn also by other UEs affected by an LO collision.

In the following, examples for shifting the MO or LO to a subsequent resource are given.

When operating on the MO level, in the exemplarily LO configuration as shown in Fig. 3, a UE may identify a collision in only MO#0 in MO group #M-1 in beam#0 and accordingly shifts MO#0 to a subsequent resource.

On an LO level, a collision might affect a plurality of MOs either within one beam or across a plurality of beams, such that, for example, a plurality of MO groups might be affected. When a collision on an LO level is identified, the complete LO is shifted to a subsequent resource affecting all MO groups of beams #0 - #N-1.

When the UE identifies an LO collision either affecting the MO it is monitoring or only affecting other MOs, such a collision is always also a collision identified on the MO level by a UE in the LO configuration. At least one MO configured to at least one UE that is part of the LO configuration collides with another resource, which might be identified by other UEs in the LO, which correspondingly might perform the above described UE behavior.

The same principle applies for an exemplarily configuration as shown in Fig. 4. A collision might be identified in an MO, which is specific for one repetition. For example, MO#0 of MO group #M-1 is affected and consequently shifted to a subsequent resource. If the collision is identified on an LO level and might affect a plurality of MOs or even a plurality of MO groups, the complete LO is shifted to a subsequent resource affecting all MO groups #0 - #M-1 of beam#0.

The explained collision identification and resolution principle also applies for LO configurations as shown in Fig. 2 and 5.

So far the UE behavior has been explained for a scenario where the UE that identifies a collision on the LO level is also directly affected by the collision. To be able to perform the above explained UE behavior on an LO level, a UE may also detect a collision on the LO level that only affects other UEs. For example, only UEs in another MO group are affected by the collision. As described above, the complete LO is shifted to a subsequent resource, which affects all UEs configured in the LO and not only the UEs that are directly affected by the collision. Meaning that all UEs in the LO perform the described UE behavior to shift the complete LO.

As explained above, the improved procedure involves shifting the MO or LO to a subsequent resource. This can be implemented according to one of the following exemplary implementations, which differ on how the subsequent resource is determined. The subsequent resource can be a resource that directly follows in time the at least one other resource causing the collision with the MO or the LO. Such an example is illustrated in Fig. 12.

Alternatively, it is possible that the subsequent resource does not directly follow in time but follows the at least one other resource causing the collision with the MO or the LO with a time offset. In such an example, the full SO is deferred for a longer time. In one example, the offset is determined by the scheduling device and provided to the UE as part of the configuration. For instance, this UE behavior allows the UE a certain time after using the colliding other resource before being able to monitor the SO.

In another example, the subsequent resource is a first available resource following in time the at least one other radio resource. This behavior allows to ensure that the SO is shifted to an available resource and does not cause another collision.

### Colliding radio resource

The improved procedure was explained above in a general manner by referring to another radio resource, which collides with the SO. In the following, specific examples of such a colliding radio resource will be presented. The improved procedure is applied to one, some or all of the below examples of a colliding radio resource.

The colliding other radio resource may be an uplink (UL) resource such as, for example, a scheduled UL resource or a configured UL resource. Examples for such scheduled UL resources are dynamic grant (DG) physical uplink shared channel (PUSCH) or configured grant (CG) PUSCH. Examples for configured UL resources are: physical random access channel (PRACH), physical uplink control channel (PUCCH), a slot in a time-division duplexing (TDD) UL subframe or frame structure, a symbol in a TDD UL subframe or frame structure, a configured resource for a subband full duplex, SBFD uplink subband.

In another example, the colliding radio resource can also be a downlink (DL) resource. The downlink resource can be, for example, a scheduled or a configured resource. The colliding downlink resource may also be a reference signal or a synchronization signal. Examples for a colliding scheduled resource are DG physical downlink shared channel (PDSCH) and DG semipersistent scheduling (SPS) PDSCH. Further examples for a colliding DL resource are: synchronization signal block (SSB), physical downlink control channel (PDCCH), channel state information reference signal (CSI-RS), positioning reference signal (PRS), TDD DL subframes or TDD DL symbols.

In another example, the colliding radio resource is a physical resource block (PRB) frequency location that is allocated to another signal meaning that the transmission of the other signal is mapped onto the PRB's frequency resource. The PRB may be assigned to a PDSCH for downlink data transmission, PUSCH for uplink data transmission, PDCCH for control signaling, or CSI-RS for channel measurements. Depending on which signal the PRB is allocated to, the UE may use the PRB differently, either transmits the signal, receives the signal or measures the signal.

In another example, the colliding radio resource is an OFDM time slot or time symbol that is allocated to another signal. The OFDM time slot or symbol may be allocated to a data signal, a control signal or a reference signal each of which are transmitted on a specific physical channel. The OFDM slot or symbol may be assigned to a PDSCH for downlink data, PUSCH for uplink data, PDCCH for scheduling and control information, or CSI-RS for channel estimation. Depending on the signal to which the OFDM is allocated, the UE may transmit, receive or measure the signal.

In another example, the other radio resource is a flexible gap slot in a TDD subframe or frame structure or is switching gap slot in a TDD subframe or frame structure. The other radio resource may also be a flexible or switching gap symbol in a TDD subframe or frame structure. A collision may also be identified when the SO overlaps with a slot or symbol that the UE requires to switch from DL to UL in a TDD frame structure.

The SO may also collide with a low power signal. For example, an SO of LP-WUS may collide with a resource configured for LP-SS. Similarly, an SO of LP-SS may collide with a configured resource for LP-WUS. Meaning that the SO may collide with another signal occasion for monitoring a low power signal.

The SO may also collide with a resource across a boundary of an SBFD symbol or a non-SBFD symbol. Such a resource can be a physical channel, signal or reference signal that spans multiple symbols. In such an example, the SO collides with a part of a symbol that extends beyond the symbol's duration into the next symbol in the slot. In a conventional TDD system, for example, a PDSCH transmission may extend across multiple symbols, crossing boundaries between OFDM symbols within a downlink slot. Similarly, CSI-RS or DMRS may be configured to span multiple symbols across boundaries for better channel estimation.

In another example, the SO may collide with an additional time duration or a gap before or after one of the above-mentioned signals or channels. Thus, not the signal or channel per se collides with the SO but a duration or gap of the signal or channel that might be caused by guard periods or processing delays. Additionally, the SO may collide with a frequency gap or frequency guard band at one or at both edges of one of the above-mentioned channels or signals. Such an overlap my cause not only an overlap in time domain but additionally also an overlap in the frequency domain.

While the full SO is shifted in time domain, the colliding other radio resource is used. If the colliding other resource is a DL channel or a reference or synchronization signal, the UE uses the radio resource in the form of receiving the signal that may be transmitted. For example, the UE might receive a signal on a PDCCH or PDSCH or might receive a SSB, CSI-RS or PRS.

Additionally, the UE may use a reference or synchronization signal in the form of performing measurements on that colliding resource. This exemplarily applies for signals such as SSB, CSI-RS or PRS.

If the colliding resource is in the form of a UL channel, such as, for example, a PRACH, PUCCH, or PUSCH the UE uses the colliding resource by transmitting a signal on the provided resource.

### BS behavior

Similar to the described UE behavior according to the present first implementation, the base station performs the BS behavior for resolving the collision.

As indicated above, the BS also identifies the collision between the SO and the at least one other radio resource and performs the BS behavior. In an example according to the first implementation, the BS shifts the full SO in time-domain to a subsequent resource. Thus, the BS applies the same behavior as the UE. The BS may then transmit a low power signal in accordance with the BS behavior. Meaning that the BS transmits the low power signal at the subsequent resource to which the SO has been shifted. The UE monitors the SO for low power signals at the subsequent resource and is thus able to receive the low-power signal.

Again, this subsequent resource can be a subsequent resource directly following in time the colliding other resource, or can follow in time with an offset. The subsequent resource can also be a first available resource that follows in time the colliding other radio resource.

The presented first implementation effectively resolves the collision providing a low complexity for the BS resource allocation and for the UE processing. Also, by shifting the full SO the complete SO can be used for transmitting a low power signal to the UE. This ensures that the performance in the network is not affected.

Non-limiting examples for a collision between an SO and another radio resource are given below.

In one implementation, the first implementation is configured when an SO for LP-WUS collides with another configured SO for LP-SS. When the UE identifies the collision, the SO of the LP-WUS is shifted according to the first implementation to avoid the collision with the SO of the LP-SS.

In another implementation, an SO for LP-SS collides with an SSB. When the UE identifies the collision, the SO is shifted according to the first implementation to resolve the collision with the SSB.In another implementation, the SO collides with a PRACH resource. The PRACH resource is configured by the base station. When the UE identifies the collision, the SO is shifted according to the first implementation to resolve the collision with the SSB. *Second Implementation*

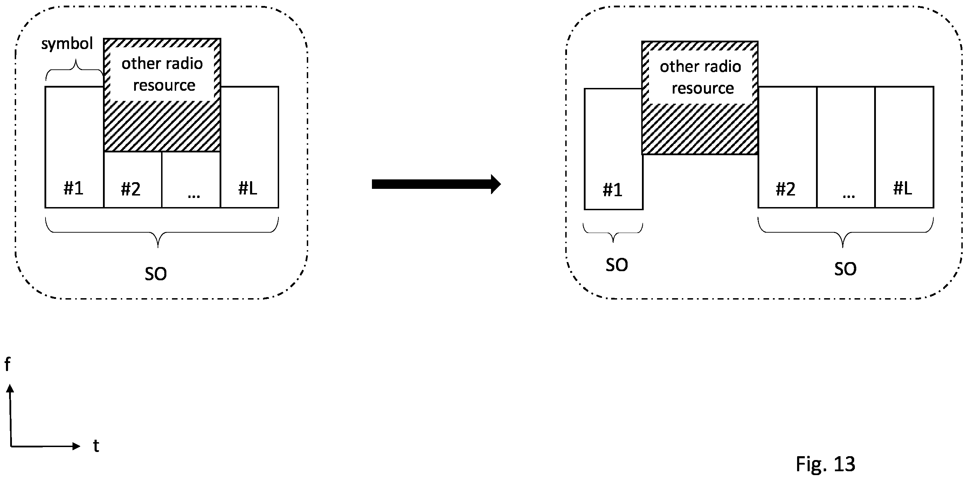

According to the Second Implementation, the UE behavior includes shifting in time domain the at least one segment of the SO colliding with the at least one other radio resource and all segments of the SO following in time the at least one segment of the SO colliding with the at least one other radio resource to a subsequent resource. An exemplarily illustration of the UE behavior according to the second implementation is depicted in Fig. 13.

Unlike the first implementation, in the second implementation, not the full SO is shifted, but only the colliding segments of the SO and the segments following in time are shifted in the time domain.

Fig. 13 shows on the left half an exemplarily collision scenario between an SO and another radio resource (same as in Fig. 12). The SO can be an MO or an LO and is again exemplarily shown with L symbols denoted as #1 - #L.

As mentioned already with respect to the first implementation, the size and number of the colliding resource is only exemplarily and not limited to one resource colliding in two symbols. Similarly, also the elaborations with respect to the partial overlap in time or in time and frequency domain are applicable for this implementation.

Fig. 13 shows exemplarily that the collision occurs after the first symbol #1 of the SO. Accordingly, when the UE identifies such a collision, the UE shifts the segments that follow the first segment (here symbol #2) in time domain. As shown on the right half of Fig. 13, the segments #2 - #L are shifted in time domain to a subsequent resource, while not shifting segment #1 before the collision. The UE monitors the segments of the SO that have not been shifted, here symbol #1, and monitors the shifted segments of the SO at the subsequent resource (here #2 - #L symbols). While the colliding segments and all following segments of the SO are shifted, the colliding other resource is used as originally intended. Also in this example, the UE uses the complete duration of the SO to monitor for low power signals and therefore can use the complete SO to decode the low power signal.

In another example not illustrated, the collision might occur already at the first segment (in Fig. 13, symbol #1) of the SO, in which case the complete SO is shifted to the subsequent resource. In such a scenario, the UE behavior according to the second implementation corresponds to the UE behavior according to the first implementation.

In the above, the improved procedure of the second implementation was described in general based on a signal occasion, which can be either a single MO or an LO comprising multiple MOs.

When the improved procedure is performed based on an MO as the SO, the UE identifies whether or not a collision occurs with one or more MOs monitored by the UE. According to the present second implementation, when identifying a collision with one or more MOs, the UE shifts the colliding segment and all following segments of the MO to a subsequent resource. The same UE behavior could be performed in turn also by other UEs affected by an MO collision.

When the improved procedure is performed based on an LO as the SO (the LO comprising a plurality of MOs), the UE identifies whether or not a collision occurs with an LO. The colliding radio resource can be in any one or more MOs of the LO and need not be in the MOs actually monitored by the UE. Thus, the UE may identify an LO collision, even if the MOs it is actually monitoring are not affected by the colliding resource.

According to the present second Implementation, when identifying an LO collision, the UE shifts the colliding segment and all following segments of the MO to a subsequent resource. The same UE behavior could be performed in turn also by other UEs affected by an LO collision.

As explained above, the improved procedure involves shifting the MO or LO to a subsequent resource. The elaborations on the subsequent resource that might directly follow in time, follows with an offset or is a first available resource as described in the first implementation are also applicable for the second implementation.

### Colliding radio resource

As explained in detail in the first implementation, the improved procedure has been explained in a general manner. Specific examples of the colliding other radio resource are mentioned below. Further details on the colliding resources have been mentioned already above for the first implementation and in the general solution and are also applicable in this second implementation.

The colliding other radio resource may be an UL resource such as, for example, a scheduled UL resource (e.g. DG PUSCH or CG PUSCH) or a configured UL resource (e.g. PRACH, PUCCH, TDD UL subframe or frame structure, a symbol in a TDD UL subframe or frame structure, a configured resource for a SBFD or SBFD UL subband).

In another example, the colliding radio resource can also be a DL resource. The downlink resource can be, for example, a scheduled (e.g. DG PDSCH or DG SPS PDSCH) or a configured resource. The colliding downlink resource may also be a reference signal or a synchronization signal such as e.g. SSB, PDCCH, CSI-RS, PRS, TDD DL subframes or TDD DL symbols.

In another example, the colliding radio resource is a PRB frequency location that is allocated to another signal, an OFDM time slot or time symbol that is allocated to another signal, a flexible gap slot in a TDD subframe or frame structure or is switching gap slot in a TDD subframe or frame structure. The other radio resource may also be a flexible or switching gap symbol in a TDD subframe or frame structure. The SO may also collide with a resource across a boundary of an SBFD symbol or a non-SBFD symbol. Additionally, the SO may collide with an additional time duration or a gap before or after one of the above-mentioned signals or channels or may collide with a frequency gap or frequency guard band at one or at both edges of one of the above-mentioned channels or signals.

As explained with respect to the first implementation, while segments of SO are shifted in time domain, the colliding other radio resource is used. If the colliding other resource is a DL channel or a reference or synchronization signal, the UE uses the radio resource in the form of receiving the signal that may be transmitted. For example, the UE might receive a signal on a PDCCH or PDSCH or might receive a SSB, CSI-RS or PRS.

Additionally, the UE may use a reference or synchronization signal in the form of performing measurements on that colliding resource. This exemplarily applies for signals such as SSB, CSI-RS or PRS. If the colliding resource is in the form of a UL channel, such as, for example, a PRACH, PUCCH, or PUSCH the UE uses the colliding resource by transmitting a signal on the provided resource.

The SO may also collide with a low power signal. For example, an SO of LP-WUS may collide with a resource configured for LP-SS. Similarly, an SO of LP-SS may collide with a configured resource for LP-WUS. Meaning that the SO may collide with another signal occasion for monitoring a low power signal.

### Base station behavior

Similar to the described UE behavior according to the present second implementation, the base station performs the BS behavior for resolving the collision.

As indicated above, the BS also identifies the collision between the SO and the at least one other radio resource and performs the BS behavior. In an example according to the second implementation, the BS shifts in time-domain the at least one segment of the SO colliding with the at least one other radio resource and all segments of the SO following in time the at least one segment of the SO colliding with the at least one other radio resource to a subsequent resource. Thus, the BS applies the same behavior as the UE. The BS may then transmit a low power signal in accordance with the BS behavior.

In an example as shown in Fig. 13, where symbol #1 has not been shifted and symbols #2 - #L have been shifted, the BS may transmit the low power signal at the segment #1 of the SO and at the subsequent resource to which the segments #2 - #L have been shifted. The UE monitors the SO for low power signals both at the segment of the SO shown as #1 symbol as well as at the shifted segments of the SO with symbols #2 - #L.

Again, this subsequent resource can be a subsequent resource directly following in time the colliding other resource, or can follow in time with an offset. The subsequent resource can also be a first available resource that follows in time the colliding other radio resource.

The presented second implementation effectively resolves the collision providing a low complexity for the BS resource allocation and for the UE processing. Also, by shifting the described segments of the SO the complete SO can be used for transmitting a low power signal to the UE. This ensures that the performance in the network is not affected. Additionally, a low latency can be achieved.

In one implementation, the second implementation is configured when an LO of a low power signal collides with an SSB. Specifically, an LO of LP-SS or an LO of LP-WUS may collide with the resource of an SSB. When the UE identifies such a collision, the UE performs the UE behavior according to the second implementation to resolve the collision.

### Third Implementation

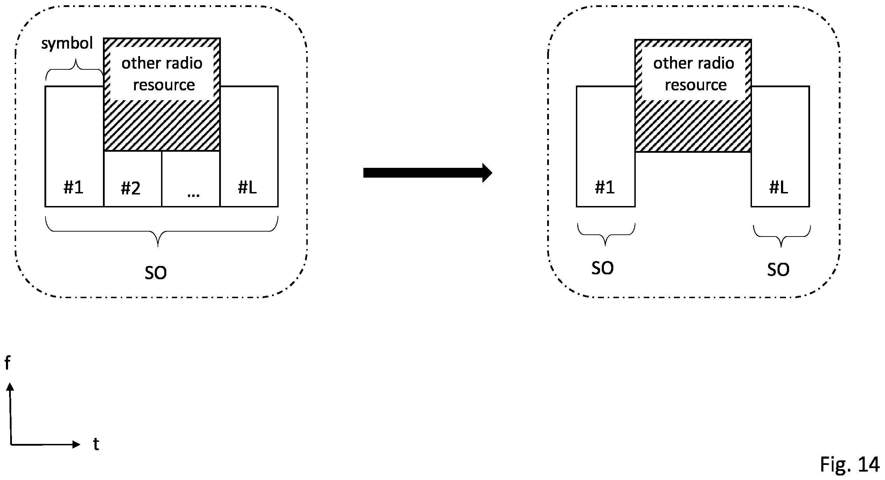

According to the Third Implementation, the UE behavior includes skipping the at least one segment of the SO colliding with the at least one other radio resource. An exemplarily illustration of the UE behavior according to the third implementation is depicted in **Fig. 14****.**

Unlike the first two implementations, the third implementation relates to a UE behavior where the colliding segments of the SO are not shifted but skipped.

Again, the left half of Fig. 14 shows exemplarily a collision scenario between an SO and another radio resource. The SO can be an MO or an LO and is exemplarily shown with L symbols denoted as #1 - #L. As mentioned with respect to the first and second implementation, the size and number of the colliding resource is only exemplarily and not limited to one resource colliding in two symbols. Similarly, also the elaborations with respect to the partial overlap in time or in time and frequency domain are applicable for this implementation.

As shown in the right half of Fig. 14, a UE behavior according to the third implementation involves skipping the colliding segments of the SO, here exemplarily shown as skipped segments between the symbols #1 and #L. In this implementation, the UE behavior includes skipping only the colliding segments. While the colliding segments of the SO are skipped, the colliding other resource is used as originally intended. The UE might still monitor all segments of the SO following in time the at least one segment of the SO colliding with the at least one other radio resource. The same applies for all segments of the SO preceding in time the colliding resource. In general, the UE monitors all non-skipped segments of the SO. Thus, in the example of Fig. 14 the UE monitors the resources of the SO denoted with symbols #1 and #L. A low power signal that may be transmitted during the SO can be decoded based on only the monitored segments.

In the above, the improved procedure of the third implementation was described in general based on a signal occasion, which can be either a single MO or an LO comprising multiple MOs.

When the improved procedure is performed based on an MO as the SO, the UE identifies whether or not a collision occurs with one or more MOs monitored by the UE. According to the present third implementation, when identifying a collision with one or more MOs, the UE skips the colliding segment of the MO. The same UE behavior could be performed in turn also by other UEs affected by an MO collision.

When the improved procedure is performed based on an LO as the SO (the LO comprising a plurality of MOs), the UE identifies whether or not a collision occurs with an LO. The colliding radio resource can be in any one or more MOs of the LO and need not be in the MOs actually monitored by the UE. Thus, the UE may identify an LO collision, even if the MOs it is actually monitoring are not affected by the colliding resource.

According to the present third implementation, when identifying an LO collision, the UE skips the colliding segment of the LO. The same UE behavior could be performed in turn also by other UEs affected by an LO collision.

### Colliding radio resource

As explained in details in the first and second implementations, the improved procedure has been explained in a general manner. Specific examples of the colliding other radio resource are mentioned below. Further details on the colliding resource have been mentioned in the first implementation and in the general solution and are also applicable in this third implementation.

The colliding other radio resource may be an UL resource such as, for example, a scheduled UL resource (e.g. DG PUSCH or CG PUSCH) or a configured UL resource (e.g. PRACH, PUCCH, TDD UL subframe or frame structure, a symbol in a TDD UL subframe or frame structure, a configured resource for a SBFD or SBFD UL subband).

In another example, the colliding radio resource can also be a DL resource. The downlink resource can be, for example, a scheduled (e.g. DG PDSCH or DG SPS PDSCH) or a configured resource. The colliding downlink resource may also be a reference signal or a synchronization signal such as e.g. SSB, PDCCH, CSI-RS, PRS, TDD DL subframes or TDD DL symbols.

In another example, the colliding radio resource is a PRB frequency location that is allocated to another signal, an OFDM time slot or time symbol that is allocated to another signal, a flexible gap slot in a TDD subframe or frame structure or is switching gap slot in a TDD subframe or frame structure. The other radio resource may also be a flexible or switching gap symbol in a TDD subframe or frame structure. The SO may also collide with a resource across a boundary of an SBFD symbol or a non-SBFD symbol. Additionally, the SO may collide with an additional time duration or a gap before or after one of the above-mentioned signals or channels or may collide with a frequency gap or frequency guard band at one or at both edges of one of the above-mentioned channels or signals.

Similar as explained with respect to the first implementation, while segments of SO are shifted in time domain, the colliding other radio resource is used. If the colliding other resource is a DL channel or a reference or synchronization signal, the UE uses the radio resource in the form of receiving the signal that may be transmitted. For example, the UE might receive a signal on a PDCCH or PDSCH or might receive a SSB, CSI-RS or PRS.

Additionally, the UE may use a reference or synchronization signal in the form of performing measurements on that colliding resource. This exemplarily applies for signals such as SSB, CSI-RS or PRS. If the colliding resource is in the form of a UL channel, such as, for example, a PRACH, PUCCH, or PUSCH the UE uses the colliding resource by transmitting a signal on the provided resource.

The SO may also collide with a low power signal. For example, an SO of LP-WUS may collide with a resource configured for LP-SS. Similarly, an SO of LP-SS may collide with a configured resource for LP-WUS. Meaning that the SO may collide with another signal occasion for monitoring a low power signal.

### Base station behavior

Similar to the described UE behavior according to the present third implementation, the base station performs the BS behavior for resolving the collision.

As indicated above, the BS also identifies the collision between the SO and the at least one other radio resource and performs the BS behavior. In an example according to the third implementation, the BS skips the at least one segment of the SO colliding with the at least one other radio resource. Thus, the BS applies the same behavior as the UE. The BS may then transmit the low power signal on all segments of the SO following in time the at least one segment of the SO colliding with the at least one other radio resource. The same behavior applies to all segments preceding in time the segment of the SO that collides. Consequently, the BS may transmit the low power signal at all non-skipped segments of the SO.

In the example as shown in Fig. 14, where all segments of the SO beside of symbol #1 and symbol #L have been shifted, the BS may transmit the low power signal at the segments denoted as #1and #L. The UE monitors these segments and decodes a received low-power signal based on the monitored segments.

The presented third implementation effectively resolves the collision providing a very low complexity for the BS resource allocation and for the UE processing. Also, this implementation provides a simple solution for large MO/LO configuration using long time duration resource for repetition or using large number of MOs in the resource for multiple UEs and minimizes an impact of collision resolution implementations on other configured or scheduled resources.

Non-limiting specific examples for a collision between an SO and another radio resource are given below.

In one implementation, the third implementation is configured when the SO collides with UL symbols or slots. In another implementation, the third implementation is configured when the SO collides with flexible symbols or slots in TDD subframe or frame structure. In another implementation, the third implementation is configured when the SO collides with gap symbols or slots in the TDD subframe or frame structure. In another implementation, the third implementation is configured when the SO collides with SBFD symbols. When the UE identifies such a collision, the UE resolves the collision by applying the UE behavior according to the presented third implementation.

### Fourth Implementation

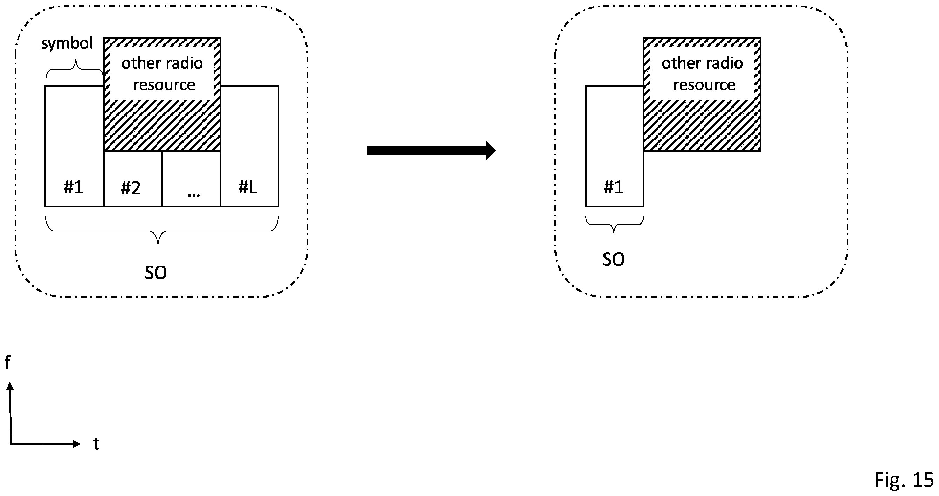

According to the Fourth Implementation, the UE behavior includes skipping the at least one segment of the SO colliding with the at least one other radio resource. The skipping of the at least one segment of the SO colliding with the at least one other radio resource then includes skipping all segments of the SO following in time the at least one segment of the SO colliding with the at least one other radio resource. An exemplarily illustration of the UE behavior according to the fourth implementation is depicted in Fig. 15.

Contrary to the third implementation, not only the colliding segments of the SO are skipped but also all segments following in time.

The left half of Fig. 15 shows exemplarily a collision scenario between an SO and another radio resource. The SO can be an MO or an LO and is exemplarily shown with L symbols denoted as #1 - #L. As mentioned in the previous implementations, the size and number of the colliding resource is only exemplarily and not limited to one resource colliding in two symbols. Similarly, also the elaborations with respect to the partial overlap in time or in time and frequency domain are applicable for this implementation.

The UE behavior according to the fourth implementation is shown in the right half of Fig. 15. Exemplarily, the collision occurred after the segment of the SO denoted as symbol #1. Consequently, all segments of the SO, here exemplarily symbols #2 - #L are skipped. While the colliding segments of the SO and all following segments are skipped, the colliding other resource is used as originally intended. The UE monitors all non-skipped segments of the SO. In the example of Fig. 15, the UE only monitors the resources of the SO denoted with symbol #1. A low power signal that may be transmitted during the SO is decoded only based on the monitored segments.

In the above, the improved procedure of the fourth implementation was described in general based on a signal occasion, which can be either a single MO or an LO comprising multiple MOs.

When the improved procedure is performed based on an MO as the SO, the UE identifies whether or not a collision occurs with one or more MOs monitored by the UE. According to the present fourth implementation, when identifying a collision with one or more MOs, the UE skips the colliding segment and all following segments of the MO. The same UE behavior could be performed in turn also by other UEs affected by an MO collision.

When the improved procedure is performed based on an LO as the SO (the LO comprising a plurality of MOs), the UE identifies whether or not a collision occurs with an LO. The colliding radio resource can be in any one or more MOs of the LO and need not be in the MOs actually monitored by the UE. Thus, the UE may identify an LO collision, even if the MOs it is actually monitoring are not affected by the colliding resource.

According to the present fourth implementation, when identifying an LO collision, the UE skips the colliding segment and all following segments of the LO. The same UE behavior could be performed in turn also by other UEs affected by an LO collision.

### Colliding radio resource

The improved procedure has been explained in a general manner. Specific examples of the colliding other radio resource are mentioned below. Further details on the colliding resource have been mentioned in the first implementation and in the general solution and are also applicable in this fourth implementation.

The colliding other radio resource may be an UL resource such as, for example, a scheduled UL resource (e.g. DG PUSCH or CG PUSCH) or a configured UL resource (e.g. PRACH, PUCCH, TDD UL subframe or frame structure, a symbol in a TDD UL subframe or frame structure, a configured resource for a SBFD or SBFD UL subband).

In another example, the colliding radio resource can also be a DL resource. The downlink resource can be, for example, a scheduled (e.g. DG PDSCH or DG SPS PDSCH) or a configured resource. The colliding downlink resource may also be a reference signal or a synchronization signal such as e.g. SSB, PDCCH, CSI-RS, PRS, TDD DL subframes or TDD DL symbols.

In another example, the colliding radio resource is a PRB frequency location that is allocated to another signal, an OFDM time slot or time symbol that is allocated to another signal, a flexible gap slot in a TDD subframe or frame structure or is switching gap slot in a TDD subframe or frame structure. The other radio resource may also be a flexible or switching gap symbol in a TDD subframe or frame structure. The SO may also collide with a resource across a boundary of an SBFD symbol or a non-SBFD symbol. Additionally, the SO may collide with an additional time duration or a gap before or after one of the above-mentioned signals or channels or may collide with a frequency gap or frequency guard band at one or at both edges of one of the above-mentioned channels or signals.

Similar as explained with respect to the first implementation, while segments of SO are shifted in time domain, the colliding other radio resource is used. If the colliding other resource is a DL channel or a reference or synchronization signal, the UE uses the radio resource in the form of receiving the signal that may be transmitted. For example, the UE might receive a signal on a PDCCH or PDSCH or might receive a SSB, CSI-RS or PRS.

The SO may also collide with a low power signal. For example, an SO of LP-WUS may collide with a resource configured for LP-SS. Similarly, an SO of LP-SS may collide with a configured resource for LP-WUS. Meaning that the SO may collide with another signal occasion for monitoring a low power signal.

Additionally, the UE may use a reference or synchronization signal in the form of performing measurements on that colliding resource. This exemplarily applies for signals such as SSB, CSI-RS or PRS. If the colliding resource is in the form of a UL channel, such as, for example, a PRACH, PUCCH, or PUSCH the UE uses the colliding resource by transmitting a signal on the provided resource.

### Base station behavior

Similar to the described UE behavior according to the present fourth implementation, the base station performs the BS behavior for resolving the collision.

As indicated above, the BS also identifies the collision between the SO and the at least one other radio resource and performs the BS behavior. In the example according to the fourth implementation, the BS skips the at least one segment of the SO colliding with the at least one other radio resource and skips all segments of the SO following in time the at least one segment of the SO colliding with the at least one other radio resource. Thus, the BS applies the same behavior as the UE. The BS may then transmit the low power signal on all non-skipped segments of the SO.

In the example as shown in Fig. 15, where all segments of the SO beside symbol #1 are shifted, the BS may transmit the low power signal at the segment denoted as #1. The UE monitors this segment and decodes a received low-power signal based on the monitored segment.

The presented fourth implementation effectively resolves the collision providing a very low complexity for the BS resource allocation and for the UE processing. Again, this implementation provides a simple solution for large MO/LO configurations and minimizes an impact of collision resolution implementations on other configured or scheduled resources.

Non-limiting examples for a collision between an SO and another radio resource are given below.

In one implementation, the fourth implementation is configured when the SO is associated for only one UE or one group or sub-group of UEs. As indicated above, the SO is an MO or an LO and the MO and the LO can be specific for a UE or for one group or subgroup of UEs. Such exemplarily configurations are explained above with respect to Fig. 2- 5. In such a configuration, when the SO collides with any of the resources as mentioned above, the UE resolves the collision by applying the UE behavior according to the fourth implementation.

In another implementation, the SO configuration may comprise repetitions. A corresponding example is described above in Fig. 2 and Fig. 4, where one MO is exemplarily shown as being specific for one repetition. In such a configuration, when the SO collides with any of the resources as mentioned above, the UE resolves the collision by applying the UE behavior according to the fourth implementation.

In another implementation, the fourth implementation is configured when the SO collides with a UL symbol or slot. In another implementation, when the SO collides with a flexible symbol or slot in TDD subframe or frame structure or collides with a gap symbol or slot in TDD subframe or frame structure, the UE resolves the collision by applying the UE behavior according to the fourth implementation.

### Fifth Implementations

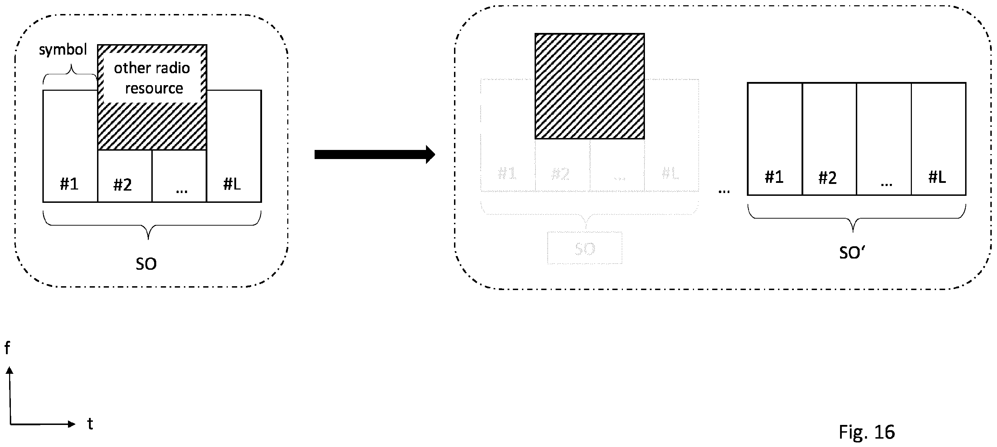

According to the Fifth Implementation, the UE behavior includes skipping the full SO colliding with the at least one other radio resource. An exemplarily illustration of the UE behavior according to the fifth implementation is depicted in Fig. 16.

In this implementation, not only the colliding segments of the SO or additionally all following segments are skipped, but the complete colliding SO is skipped.

Fig. 16 shows on the left half an exemplarily collision scenario between an SO and another radio resource. The SO can be an MO or an LO and is again exemplarily shown with L symbols denoted as #1 - #L. As mentioned with respect to the previous implementations, the size and number of the colliding resource is only exemplarily and not limited to one resource colliding in two symbols. Similarly, also the elaborations with respect to the partial overlap in time or in time and frequency domain are applicable for this implementation.

Independently of the exact symbol or symbols that collide with the other radio resource, the complete SO is skipped. The skipped SO, or part of it, is not shifted to a subsequent resource, different from other previously-discussed embodiments. This is exemplarily shown in the right half of Fig. 16. For illustration purposes, the skipped SO is shown greyed in Fig. 16.

As part of the UE behavior, the UE may then monitor a subsequent SO following in time the skipped SO. Fig. 16 shows a subsequent SO denoted as SO'. The subsequent SO' is the next configured SO following in time the skipped SO.

As explained in the previous embodiments, the improved procedure of the fifth implementation was first described in general based on a signal occasion, which can be either a single MO or an LO comprising multiple MOs.

When the improved procedure is performed based on an MO as the SO, the UE identifies whether or not a collision occurs with one or more MOs monitored by the UE. According to the present fifth implementation, when identifying a collision with one or more MOs, the UE skips the full colliding MOs When the improved procedure is performed based on an LO as the SO (the LO comprising a plurality of MOs), the UE identifies whether or not a collision occurs with an LO. The colliding radio resource can be in any one or more MOs of the LO and need not be in the MOs actually monitored by the UE. Thus, the UE may identify an LO collision, even if the MOs it is actually monitoring are not affected by the colliding resource. According to the present fifth implementation, when identifying an LO collision, the UE skips the full LO. The same UE behavior could be performed in turn also by other UEs affected by an LO collision.

### Colliding radio resource

As explained in details in the first implementation, the improved procedure has been explained in a general manner. Specific examples of the colliding other radio resource are mentioned below. Further details on the colliding resource have been mentioned in the first implementation and in the general solution and are also applicable in this fifth implementation.

The colliding other radio resource may be an UL resource such as, for example, a scheduled UL resource (e.g. DG PUSCH or CG PUSCH) or a configured UL resource (e.g. PRACH, PUCCH, TDD UL subframe or frame structure, a symbol in a TDD UL subframe or frame structure, a configured resource for a SBFD or SBFD UL subband).

In another example, the colliding radio resource can also be a DL resource. The downlink resource can be, for example, a scheduled (e.g. DG PDSCH or DG SPS PDSCH) or a configured resource. The colliding downlink resource may also be a reference signal or a synchronization signal such as e.g. SSB, PDCCH, CSI-RS, PRS, TDD DL subframes or TDD DL symbols.

In another example, the colliding radio resource is a PRB frequency location that is allocated to another signal, an OFDM time slot or time symbol that is allocated to another signal, a flexible gap slot in a TDD subframe or frame structure or is switching gap slot in a TDD subframe or frame structure. The other radio resource may also be a flexible or switching gap symbol in a TDD subframe or frame structure. The SO may also collide with a resource across a boundary of an SBFD symbol or a non-SBFD symbol. Additionally, the SO may collide with an additional time duration or a gap before or after one of the above-mentioned signals or channels or may collide with a frequency gap or frequency guard band at one or at both edges of one of the above-mentioned channels or signals.

Similar as explained with respect to the previous implementations, while the SO is skipped, the colliding other radio resource is used. If the colliding other resource is a DL channel or a reference or synchronization signal, the UE uses the radio resource in the form of receiving the signal that may be transmitted. For example, the UE might receive a signal on a PDCCH or PDSCH or might receive a SSB, CSI-RS or PRS.

The SO may also collide with a low power signal. For example, an SO of LP-WUS may collide with a resource configured for LP-SS. Similarly, an SO of LP-SS may collide with a configured resource for LP-WUS. Meaning that the SO may collide with another signal occasion for monitoring a low power signal.

Additionally, the UE may use a reference or synchronization signal in the form of performing measurements on that colliding resource. This exemplarily applies for signals such as SSB, CSI-RS or PRS. If the colliding resource is in the form of a UL channel, such as, for example, a PRACH, PUCCH, or PUSCH the UE uses the colliding resource by transmitting a signal on the provided resource.

### Base station behavior

Similar to the described UE behavior according to the present fifth implementation, the base station performs the BS behavior for resolving the collision.

As indicated above, the BS also identifies the collision between the SO and the at least one other radio resource and performs the BS behavior. In the example according to the fifth implementation, the BS skips the full SO colliding with the at least one other radio resource. Thus, the BS applies the same behavior as the UE. The BS may then transmit a low power signal on a subsequent SO following in time the skipped SO. The UE then monitors the SO at the subsequent SO and decodes a low power signal received at the subsequent resource.

The presented fifth implementation effectively resolves the collision providing a very low complexity for the BS resource allocation and for the UE processing.

In one implementation, the fifth implementation is configured when the SO collides with an SSB. In another implementation, when the UE identifies a collision between the SO of LP-WUS with a configured resource of LP-SS, the UE resolves the collision by applying the UE behavior according to the fifth solution.

### Sixth Implementations

The sixth implementation relates to an implementation that is combinable and applicable with all previously explained implementations.

The UE might receive a configuration from the base station and performs the UE behavior in accordance with the received configuration. Such a configuration can be transmitted to the UE once or can be transmitted dynamically such that the UE behavior may switch between the described implementations. In such an example, the UE may support a plurality of UE behaviors. The UE then performs one of the plurality of UE behaviors based on the identified collision and based on a received configuration. Meaning that the UE receives a configuration that indicates which UE behavior should be performed based on factors such as the identified collision or priority factors as it will be explained below. Correspondingly, the BS transmits a configuration for the UE behavior to the UE. Also the BS can be configured to support a plurality of BS behaviors and performs one of the plurality of BS behaviors based on the identified collision and the configuration transmitted to the UE, in accordance with the UE behavior.

For both setups, a fixed and a dynamic UE configuration, the UE behavior can be based on one or a combination of the following factors. Depending on a UE RRC mode such as, for example, whether the UE is in an RRC connected mode or in an RRC IDLE/INACTIVE mode, one of the above-described first - fifth implementations may be configured for the UE.

For example, when the UE is in RRC connected mode and identifies a collision between the SO and a colliding radio resource, the UE performs the UE behavior according to one of the second, third or fourth implementation. When the UE is in IDLE/INACTIVE mode and identifies a collision, the UE may, for example, perform one of the first or fifth implementation.

Additionally, the UE behavior might depend on a priority of the low power signal such as a priority of a LP-WUS or LP-SS. For example, when the priority of the low power signal is high, it may be desirable to use the complete resource of the SO for monitoring for low power signals. Thus, the UE performs one of the first or second implementations, to ensure that it is possible for the UE to receive the higher-priority low power signal. The same applies for the BS behavior.

In another case, where the priority of the low power signals is low, it is not required to monitor the (complete) SO for low power signals, and thus the UE behavior according to one of the third, fourth and fifth implementations can be performed.

The UE behavior as explained in details above relates to implementations where an operation such as shifting or skipping is performed on the colliding SO while the colliding other radio resource is used. In another implementation, the behavior may be adapted based on a priority of the colliding other radio resource.

In the above description so far, it was exemplary assumed that the priority of the colliding other resource is higher than the low power signal, such that resolving the collision involved primarily adapting part of the complete signal occasion for receiving the low power signal. However, the improved procedure is not limited to such a behavior, but can more flexibly resolve the collision by behaving differently with respect to the colliding other resource.

For instance, depending on the priority of the colliding other radio resource, the UE behavior may include using the SO as configured and not using the colliding other radio resource. The expression *"priority of the colliding other radio resource"* refers to the priority of each signal/channel/frame of the examples for colliding resources as mentioned in detail in the first implementation. For example, if the priority of the colliding other radio resource is low, the UE may not perform a UE behavior by adapting at least a segment of the SO but may completely use the SO as configured. The UE may instead adapt the colliding other resource and may skip or shift the colliding other resource. Such a behavior may be applied if a 1:1 mapping of the transmitted beam of the low power signal to an SSB used for synchronization is desirable.

### Further Implementations

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signallingonly connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate ULand DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

FIG. 20 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, subbandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a communication apparatus is provided that includes the following. The communication apparatus includes a transceiver, which monitors a signal occasion, SO, of a low power signal. The communication apparatus also comprises a processing circuitry, which identifies a collision between the signal occasion and at least one other radio resource; and which performs a UE behavior by adapting at least one segment of the signal occasion in time-domain to resolve the identified collision.

According to a second aspect provided in addition to the first aspect, the SO is a monitoring occasion, MO, or a low power occasion, LO, and the low power signal is a low power wake up signal, LP-WUS, or a low power synchronization signal, LP-SS. In an optional implementation, the LP-WUS is received during the SO and indicates performing a monitoring operation. In an optional implementation, the LP-SS is received for synchronizing to the LP-WUS.

According to a third aspect provided in addition to any one of the first to second aspects, the LP-WUS indicates monitoring a downlink control channel in case the communication apparatus is in a RRC CONNECTED mode and indicates monitoring for paging in case the communication apparatus is in a RRC IDLE or RRC INACTIVE mode.

According to a fourth aspect, provided in addition to any one of the first to third aspects, the at least one other radio resource includes an uplink, UL, resource or a downlink, DL, resource. In an optional implementation, the UL resource is a scheduled UL resource or a configured UL resource. In an optional implementation, the DL resource is a scheduled DL resource, or a configured DL resource. In an optional implementation, the DL resource is a reference signal or synchronization signal.

According to a fifth aspect, provided in addition to any one of the first to fourth aspects, the collision between the SO and the at least one other radio resource is a time-related collision, having an overlapping time-domain resource. In an optional implementation, the collision between the signal occasion and the at least one other radio resource is a time-frequency-related collision, having an overlapping resource in time and frequency domain.

According to a sixth aspect, provided in addition to any one of the first to fifth aspects, the processing circuitry uses the at least one other radio resource. In an optional implementation, using the at least one other radio resource includes receiving a signal. In an optional implementation, using the at least one other radio resource includes transmitting a signal. In an optional implementation, the processing circuitry performs measuring on the at least one other radio resource.

According to a seventh aspect, provided in addition to any one of the first to sixth aspects the at least one other radio resource includes at least one of the following:
- a flexible or switching gap slot in a time division duplex, TDD, subframe or frame structure;
- a flexible or switching gap symbol in a TDD subframe or frame structure;
- a UL symbol in TDD subframe or frame structure;
- a UL slot in TDD subframe or frame structure
- a physical resource block, PRB, frequency location allocated to another signal;
- an Orthogonal Frequency Division Multiplexing, OFDM, symbol or a time slot allocated to another signal;
- a synchronization signal block, SSB;
- a channel state information reference signal, CSI-RS;
- a physical downlink control channel, PDCCH;
- a dynamic grant physical downlink shared channel, DG-PDSCH
- a semi-persistently scheduled, SPS, PDSCH
- a positioning reference signal, PRS;
- a physical random access channel, PRACH;
- a physical uplink control channel, PUCCH;
- a DG physical uplink shared channel, DG PUSCH;
- a configured grant PUSCH, CG PUSCH;
- a configured resource for Subband Full Duplex, SBFD uplink subband;
- a configured resource for LP-SS;
- a configured resource for LP-WUS.

In an optional implementation, the at least one other radio resource is a resource across a boundary of an SBFD symbol or across a boundary of a non-SBFD-symbol.

According to an eighth aspect, provided in addition to any one of the first to seventh aspects, the UE behavior includes shifting or skipping the full SO colliding with the at least one other radio resource, or the UE behavior includes shifting or skipping parts of the SO colliding with the at least one other radio resource.

According to a ninth aspect, provided in addition to any one of the first to eighth aspects, the UE behavior is performed based on one or combination of the following factors:
- a UE RRC mode, optionally, wherein the UE RRC mode is RRC CONNECTED or RRC IDLE/INACTIVE mode;
- a priority of the low-power signal, optionally, wherein the low-power signal is a LP-WUS or a LP-SS;
- a priority of the other radio resource.

According to a tenth aspect, provided in addition to any one of the first to ninth aspects, the communication apparatus performs the UE behavior based on a configuration received from a base station.

According to an eleventh aspect, provided in addition to the tenth aspect, the communication apparatus is configured to support a plurality of UE behaviors and the processing circuitry performs one of the plurality of UE behaviors based on the identified collision and the received configuration.

According to a twelfth aspect, provided in addition to anyone of the first to eleventh aspects, the UE behavior includes shifting the full SO in time domain to a subsequent resource.

According to a thirteenth aspect, provided in addition to any one of the first to eleventh aspects, the UE behavior includes shifting in time domain the at least one segment of the SO colliding with the at least one other radio resource and all segments of the SO following in time the at least one segment of the SO colliding with the at least one other radio resource to a subsequent resource.

According to a fourteenth aspect, provided in addition to any one of the twelfth or thirteenth aspect, the subsequent resource directly follows in time the at least one other radio resource. In an optional implementation, the subsequent resource follows in time the at least one other radio resource with an offset. In an optional implementation, the subsequent resource is a first available resource following in time the at least one other radio resource.

According to a fifteenth aspect, provided in addition to any one of the twelfth or thirteenth aspect, the UE behavior includes monitoring the shifted SO at the subsequent resource.

According to a sixteenth aspect, provided in addition to any one of the first to eleventh aspects, the UE behavior includes skipping the at least one segment of the SO colliding with the at least one other radio resource. In an optional implementation, the transceiver monitors all segments of the SO following in time the at least one segment of the SO colliding with the at least one other radio resource.

According to a seventeenth aspect, provided in addition to the sixteenth aspect, the skipping of the at least one segment of the SO colliding with the at least one other radio resource includes skipping all segments of the SO following in time the at least one segment of the SO colliding with the at least one other radio resource.

According to a eighteenth aspect, provided in addition to any one of the sixteenth or seventeenth aspects, the processing circuitry decodes the low-power signal based on the monitored segments of the SO.

According to a nineteenth aspect, provided in addition to any one of the first to eleventh aspects, the UE behavior includes skipping the full SO colliding with the at least one other radio resource. In an optional implementation, the transceiver monitors a subsequent SO following in time the skipped SO.

According to a twentieth aspect, a base station is provided that includes the following. The base station comprises a processing circuitry, which identifies a collision between the signal occasion and at least one other radio resource; and which performs a BS behavior by adapting at least one segment of the signal occasion in time-domain to resolve the identified collision. The base station also comprises a transceiver, which transmits a low power signal on the SO in accordance with the BS behavior.

According to a twenty-first aspect, provided in addition to the twentieth aspect, the SO is a monitoring occasion, MO, or a low power occasion, LO and the low power signal is a low power wake up signal, LP-WUS, or a low power synchronization signal, LP-SS. In an optional implementation, the LP-WUS is transmitted during the SO and indicates performing a monitoring operation. In an optional implementation, the LP-SS is transmitted for synchronizing to the LP-WUS.

According to a twenty-second aspect, provided in addition to any one of the twentieth or twenty-first aspect, the BS behavior includes shifting or skipping the full SO colliding with the at least one other radio resource, or the BS behavior includes shifting or skipping parts of the SO colliding with the at least one other radio resource.

According to a twenty-third aspect, provided in addition to any one of the twentieth to twenty-second aspects, the base station transmits a configuration for the UE behavior to the communication apparatus.

According to a twenty-fourth aspect, provided in addition to the twenty-third aspect, the base station is configured to support a plurality of BS behavior, and the processing circuitry performs one of the plurality of BS behaviors based on the identified collision and the transmitted configuration.

According to a twenty-fifth aspect, provided in addition to any one of the twentieth to twenty- fourth aspects, the BS behavior includes shifting the full SO in time domain to a subsequent resource.

According to a twenty-sixth aspect, provided in addition to any one of the twentieth to twenty-fourth aspects, the BS behavior includes shifting in time domain the at least one segment of the SO colliding with the at least one other radio resource and all segments of the SO following in time the at least one segment of the SO colliding with the at least one other radio resource to a subsequent resource.

According to a twenty-seventh aspect, provided in addition to any one of the twenty-fifth or twenty-sixth aspect, the subsequent resource directly follows in time the at least one other radio resource. In one implementation, the subsequent resource follows in time the at least one other radio resource with an offset. In one implementation, the subsequent resource is a first available resource following in time the at least one other radio resource.

According to a twenty-eighth aspect, provided in addition to any one of the twenty-fifth or twenty-sixth aspect, the BS behavior includes transmitting the low power signal on the shifted SO at the subsequent resource.

According to a twenty-ninth aspect, provided in addition to any one of the twentieth to twenty-fourth aspects, the BS behavior includes skipping the at least one segment of the SO colliding with the at least one other radio resource. In one implementation, the transceiver transmits the low power signal on all segments of the SO following in time the at least one segment of the SO colliding with the at least one other radio resource.

According to a thirtieth aspect, provided in addition to the twenty-ninth aspect, the skipping of the at least one segment of the SO colliding with the at least one other radio resource includes skipping all segments of the SO following in time the at least one segment of the SO colliding with the at least one other radio resource.

According to a thirty-first aspect, provided in addition to any one of the twentieth to twenty- fourth aspects, the BS behavior includes skipping the full SO colliding with the at least one other radio resource. In one implementation, the transceiver transmits the low power signal on a subsequent SO following in time the skipped SO.

According to a thirty-second aspect, a method is provided comprising the following steps by a communication apparatus:
monitoring an SO of a low power signal;
identifying a collision between an SO and at least one other radio resource; and
performing a UE behavior by adapting at least one segment of the SO in time-domain to resolve the identified collision.

According to a thirty-third aspect, a method is provided comprising the following steps by a base station:
identifying a collision between an SO and at least one other radio resource;
performing a BS behavior by adapting at least one segment of the SO in time-domain to resolve the identified collision; and
transmitting an LP-S on the SO in accordance with the BS behavior.

According to a thirty-fourth aspect, an integrated circuit is provided, which, in operation, controls a process of a communication apparatus, the process comprising the following steps performed by the communication apparatus:
monitoring an SO of a low power signal;
identifying a collision between an SO and at least one other radio resource; and
performing a UE behavior by adapting at least one segment of the SO in time-domain to resolve the identified collision.

According to a thirty-fifth aspect, an integrated circuit is provided, which, in operation, controls a process of a base station, the process comprising the following steps performed by the base station:
identifying a collision between an SO and at least one other radio resource;
performing a BS behavior by adapting at least one segment of the SO in time-domain to resolve the identified collision; and
transmitting an LP-S on the SO in accordance with the BS behavior.

## Claims

1. A communication apparatus, comprising:
a transceiver, which in operation:
monitors a signal occasion, SO, of a low power signal, and
a processing circuitry, which in operation:
identifies a collision between the signal occasion and at least one other radio resource; and
performs a UE behavior by adapting at least one segment of the signal occasion in time-domain to resolve the identified collision.

2. The communication apparatus according to one of the preceding claims,
wherein the SO is a monitoring occasion, MO, or a low power signal occasion, LO, and
wherein the low power signal is a low power wake up signal, LP-WUS, or a low power synchronization signal, LP-SS;
optionally, wherein the LP-WUS is received during the SO and indicates performing a monitoring operation.;
optionally, wherein the LP-SS is received for synchronizing to the LP-WUS.

3. The communication apparatus according to one of the preceding claims
wherein the at least one other radio resource includes at least one of the following:
- a flexible or switching gap slot in a time division duplex, TDD, subframe or frame structure;
- a flexible or switching gap symbol in a TDD subframe or frame structure;
- a UL symbol in TDD subframe or frame structure;
- a UL slot in TDD subframe or frame structure
- a physical resource block, PRB, frequency location allocated to another signal;
- an Orthogonal Frequency Division Multiplexing, OFDM, symbol or a time slot allocated to another signal;
- a synchronization signal block, SSB;
- a channel state information reference signal, CSI-RS;
- a physical downlink control channel, PDCCH;
- a dynamic grant physical downlink shared channel, DG-PDSCH
- a semi-persistently scheduled, SPS, PDSCH
- a positioning reference signal, PRS;
- a physical random access channel, PRACH;
- a physical uplink control channel, PUCCH;
- a DG physical uplink shared channel, DG PUSCH;
- a configured grant PUSCH, CG PUSCH;
- a configured resource for Subband Full Duplex, SBFD uplink subband;
- a configured resource for LP-SS;
- a configured resource for LP-WUS;
optionally, wherein the at least one other radio resource is a resource across a boundary of an SBFD symbol or across a boundary of a non-SBFD-symbol.

4. The communication apparatus according to one of the preceding claims,
wherein the communication apparatus performs the UE behavior based on a configuration received from a base station.

5. The communication apparatus according to claim 4,
wherein the communication apparatus is configured to support a plurality of UE behaviors,
wherein the processing circuitry, in operation, performs one of the plurality of UE behaviors based on the identified collision and the received configuration.

6. The communication apparatus according to one of the preceding claims,
wherein the UE behavior includes shifting the full SO in time domain to a subsequent resource.

7. The communication apparatus according to one of claims 1 - 5,
wherein the UE behavior includes shifting in time domain
the at least one segment of the SO colliding with the at least one other radio resource and all segments of the SO following in time the at least one segment of the SO colliding with the at least one other radio resource
to a subsequent resource.

8. The communication apparatus according to one of claims 6 or 7,
wherein the subsequent resource directly follows in time the at least one other radio resource;
optionally, wherein the subsequent resource follows in time the at least one other radio resource with an offset;
optionally, wherein the subsequent resource is a first available resource following in time the at least one other radio resource.

9. The communication apparatus according to one of claims 6 or 7,
wherein the UE behavior includes monitoring the shifted SO at the subsequent resource.

10. The communication apparatus according to one of claims 1 - 5,
wherein the UE behavior includes skipping the at least one segment of the SO colliding with the at least one other radio resource, and
optionally wherein the transceiver, in operation, monitors all segments of the SO following in time the at least one segment of the SO colliding with the at least one other radio resource.

11. The communication apparatus according to claim 10,
wherein the skipping of the at least one segment of the SO colliding with the at least one other radio resource includes skipping all segments of the SO following in time the at least one segment of the SO colliding with the at least one other radio resource.

12. The communication apparatus according to one of claims 10 and 11,
wherein the processing circuitry, in operation, decodes the low-power signal based on the monitored segments of the SO.

13. The communication apparatus according to one of claims 1 - 5,
wherein the UE behavior includes skipping the full SO colliding with the at least one other radio resource; and
optionally, wherein the transceiver, in operation, monitors a subsequent SO following in time the skipped SO.

14. A base station, comprising:
a processing circuitry, which in operation:
identifies a collision between the signal occasion and at least one other radio resource; and
performs a BS behavior by adapting at least one segment of the signal occasion in time-domain to resolve the identified collision
a transceiver, which in operation:
transmits a low power signal on the SO in accordance with the BS behavior.

15. A method comprising the following steps performed by a communication apparatus:
monitoring an SO of a low power signal;
identifying a collision between an SO and at least one other radio resource; and
performing a UE behavior by adapting at least one segment of the SO in time-domain to resolve the identified collision.
